(19) Europäisches Patentamt
European Patent Office
Office européen des brevets

(11) EP 4 234 629 B1

(12) **EUROPEAN PATENT SPECIFICATION**

(45) Date of publication and mention of the grant of the patent:
**30.10.2024 Bulletin 2024/44**

(21) Application number: **22159240.5**

(22) Date of filing: **28.02.2022**

(51) International Patent Classification (IPC):
***C08L 23/12*** *(2006.01)*

(52) Cooperative Patent Classification (CPC):
(C-Sets available)
**C08L 23/12; C08F 110/06; C08F 210/06;**
C08F 4/65912; C08F 4/65916; C08F 2420/07;
C08L 2205/025; C08L 2205/06; C08L 2308/00

(Cont.)

(54) **NUCLEATED BIMODAL POLYPROPYLENE**

NUKLEIERTES BIMODALES POLYPROPYLEN

POLYPROPYLÈNE BIMODAL NUCLÉÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.08.2023 Bulletin 2023/35**

(73) Proprietor: **Borealis AG**
**1020 Vienna (AT)**

(72) Inventors:
- **WANG, Jingbo**
  **4021 Linz (AT)**
- **BERNREITNER, Klaus**
  **4021 Linz (AT)**
- **LESKINEN, Pauli**
  **06101 Porvoo (FI)**
- **DELAVIERE, Lionel**
  **92400 Courbevoie (FR)**
- **WEICKINGER, Magdalena**
  **1220 Vienna (AT)**

(74) Representative: **Maiwald GmbH**
**Elisenhof**
**Elisenstraße 3**
**80335 München (DE)**

(56) References cited:
**CN-A- 105 209 503** **CN-A- 105 339 424**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/6492;**
**C08F 210/06, C08F 4/65927;**
**C08L 23/12, C08K 3/01, C08L 23/14;**
C08F 110/06, C08F 2500/12, C08F 2500/15, C08F 2500/34, C08F 2500/33;
C08F 110/06, C08F 2500/12, C08F 2500/35;
C08F 210/06, C08F 210/08, C08F 2500/12, C08F 2500/15, C08F 2500/34, C08F 2500/33;
C08F 210/06, C08F 210/08, C08F 2500/12, C08F 2500/35

## Description

The present invention is directed to an alpha-nucleated bimodal polypropylene and to thin wall injection molded articles made therefrom.

Polystyrene is one of the widely used polymers in the daily life, including packaging, due to its excellent combination of high stiffness, high transparency and low costs. However polystyrene has the disadvantage that its monomer is a problem under environmental, health and safety aspects and recycling requires a highly pure feedstock and thus other polymers not having such disadvantages are preferred. One of such polymers is polypropylene.

Polypropylene is one of the best choices, as it is rather cheap has good stiffness and can be widely used without environmental, health and safety concerns. However, even though its stiffness is already quite good it is still not comparable to the stiffness of polystyrene. Also, the optics of typical polypropylene need further improved to be competitive with polystyrene. It is known that propylene homopolymer produced with metallocene catalysts has improved behavior regarding the required properties for the use in injection molded articles compared to known propylene homopolymer produced with Ziegler-Natta catalysts. However, such a metallocene propylene homopolymer is still not competitive enough in view of polystyrene.

Thus, the object of the present invention is to provide a polypropylene having enhanced stiffness and optical properties compared to polypropylenes already being state of the art.

The finding of the present invention is to provide a polypropylene being bimodal in molecular weight distribution and having a low comonomer content, i.e. not exceeding 0.75 mol-%, wherein said bimodal polypropylene is alpha-nucleated.

Hence, the present invention is directed to an alpha-nucleated polypropylene composition (n-PP) comprising

(a) a first polypropylene (PP1) having a melt flow rate $MFR_2$ (230 °C; 2.16 kg), measured according to ISO 1133, in the range of 10 to 100 g/10min,
(b) a second polypropylene (PP2), and
(c) an alpha-nucleating agent,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) a molecular weight distribution (MWD) determined by Gel Permeation Chromatography (GPC) in the range of 3.5 to 6.5,
(iii) 2,1 erythro regio-defects in the range of >0.35 to 0.85 mol-% measured by $^{13}C$ NMR, and
(iv) a comonomer content of not more than 0.75 mol-%, wherein the comonomer is selected from the group consisting of ethylene, 1-butene and 1-hexene.

Preferably the alpha-nucleated polypropylene composition (n-PP) contains at least one alpha-nucleating agent selected from the group consisting of polymeric nucleating agent, sorbitol-based nucleating agent, nonitol-based nucleating agent and benzene-trisamide-based nucleating agent. Still more preferably the alpha-nucleating agent is selected from the group consisting of 1,2,3-trideoxy-4,6;5,7-bis-O-[(4-propylphenyl)methylene] nonitol, bis-(3,4-dimethylbenzylidene)-sorbitol (DMDBS) and poly vinylcyclohexane (p-VCH). Yet more preferably the alpha-nucleating agent(s) present in the alpha-nucleated polypropylene composition (n-PP) is/are selected from the group consisting of 1,2,3-trideoxy-4,6;5,7-bis-O-[(4-propylphenyl)methylene] nonitol, bis-(3,4-dimethylbenzylidene)-sorbitol (DMDBS) and poly vinylcyclohexane (p-VCH).

Preferably the total amount of alpha-nucleating agent within the alpha-nucleated polypropylene composition (n-PP) is in the range of 0.001 to 2.0 wt.-%. Thus, it is especially preferred that the alpha-nucleating agent(s) present in the alpha-nucleated polypropylene composition (n-PP) is/are selected from the group consisting of poly vinylcyclohexane (p-VCH), 1 ,2,3-trideoxy-4,6;5,7-bis-O-[(4-propylphenyl)methylene] nonitol and bis-(3,4-dimethylbenzylidene)-sorbitol (DMDBS), wherein further the total amount of the alpha-nucleating agent(s), based on the total amount of the alpha-nucleated polypropylene composition (n-PP), is in the range of 0.1 to 0.8 wt.-%.

Further preferred embodiments of the alpha-nucleated polypropylene composition (n-PP) according to this

invention are defined in the claims.

Additionally, the present invention is also directed to an injection molded article, more preferably to an thin wall injection molded article, consisting of the alpha-nucleated polypropylene composition (n-PP) according to this invention, wherein preferably the thin wall injection molded article has a wall thickness up to 1.0 mm.

In the following, the invention is described in more detail.

The alpha-nucleated polypropylene composition (n-PP) according to this invention comprises two different polypropylenes (PP1) and (PP2) and additionally an alpha nucleating agent. The main components of the alpha-nucleated polypropylene composition (n-PP) are the two different polypropylenes (PP1) and (PP2). In other words the total amount of the two different polypropylenes (PP1) and (PP2), based on the alpha-nucleated polypropylene composition (n-PP), is at least 94 wt.-%, more preferably at least 95 wt.-%.

The remaining part of the alpha-nucleated polypropylene composition (n-PP) is the alpha-nucleating agent, further optional polypropylene(s) as defined further below and optionally typical additives, like antioxidants, antistatic agents and antifogging agents.

The amount of alpha-nucleating agent, based on the total alpha-nucleated polypropylene composition (n-PP), is preferably in the range of 0.001 to 2.0 wt.-%, more preferably in the range of 0.01 to 1.0 wt.-%, still more preferably in the range of 0.05 to 0.5 wt.-%, yet more preferably in the range of 0.1 to 0.8 wt.-%.

Typically the total amount of additives, excluding the alpha-nucleating agent, based on the total alpha-nucleated polypropylene composition (n-PP), shall not exceed 1.0 wt.-%, preferably is in the range of 0.05 to 1.0 wt.-%.

The alpha-nucleating agent and the additives may be added to the polypropylene comprising the polypropylenes (PP1) and (PP2) together with low amounts of polyolefins being different to the polypropylenes (PP1) and (PP2). The term "different to" in this context means that the polyolefin differs from the polypropylenes (PP1) and (PP2) in at least one typical characterizing feature in the field of polymers, like molecular weight, for instance in terms of melt flow rate $MFR_2$ (230 °C; 2.16 kg), melting point and/or misinsertions, for instance in 2,1 erythro regio-defects. Preferably the polyolefins used for this purpose are polypropylenes, especially a propylene homopolymer. Accordingly, such polypropylene, more preferably such propylene homopolymer, has a melt flow rate $MFR_2$ (230 °C; 2.16 kg), measured according to ISO 1133, in the range of 1.0 to 25.0 g/10min. Even more preferably, such polypropylene, still more preferably such propylene homopolymer, has been produced with a Ziegler-Natta catalyst of the 4$^{th}$ or 5$^{th}$ generation (cf. pages17/18 of "Polypropylene Handbook" 2$^{nd}$ Edition of Nello Pasquini) and thus has a highest melting peak temperature $T_{p,m}$ measured by DSC (scan rate of 10 °C/min; second heating step) in the range of 162 to 169 °C. A typical additional feature of such a polypropylene, more preferably of such a propylene homopolymer, produced with a Ziegler-Natta catalyst of the 4$^{th}$ or 5$^{th}$ generation is that it does not show 2,1 erythro regio-defects, i.e. has no detectable 2,1 erythro regio-defects when analyzed according to this invention. Accordingly it is preferred that the alpha-nucleated polypropylene composition (n-PP) comprise one or more propylene homopolymer(s) being different to the polypropylenes (PP1) and (PP2), wherein said one or more propylene homopolymer(s), has/have a melt flow rate $MFR_2$ (230 °C; 2.16 kg), measured according to ISO 1133, in the range of 1.0 to 25.0 g/10min. More preferably, the one or more propylene homopolymer(s) being different to the polypropylenes (PP1) and (PP2) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C. Even more preferred the one or more propylene homopolymer(s) being different to the polypropylenes (PP1) and (PP2), has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR. The total amount of the one or more propylene homopolymer(s) as defined in this paragraph , based on the total amount of the alpha-nucleated polypropylene composition (n-PP), is in the range of 0.5 to 4.0 wt.-%.

Accordingly the present invention is especially directed to an alpha-nucleated polypropylene composition (n-PP) comprising, preferably consisting of,

(a) a first polypropylene (PP1) having a melt flow rate $MFR_2$ (230 °C; 2.16 kg), measured according to ISO 1133, in the range of 10 to 100 g/10min,
(b) a second polypropylene (PP2),
(c) 0.01 to 1.0 wt.-%, based on the alpha-nucleated polypropylene composition (n-PP), of an alpha-nucleating agent,
(d) 0.05 to 1.0 wt.-%, based on the alpha-nucleated polypropylene composition (n-PP), of additives being not an alpha-nucleating agent, and
(e) optionally 0.5 to 4.0 wt.-%, based on the alpha-nucleated polypropylene composition (n-PP), of one or more propylene homopolymer(s) being different to the polypropylenes (PP1) and (PP2), wherein said one or more propylene homopolymer(s) has/have a melt flow rate $MFR_2$ (230 °C; 2.16 kg), measured according to ISO 1133, in the range of 1.0 to 25.0 g/10min, preferably said one or more propylene homopolymer(s) has/have a melt flow rate $MFR_2$ (230 °C; 2.16 kg), measured according to ISO 1133, in the range of 1.0 to 25.0 g/10min and a highest melting

peak temperature $T_{p,m}$ measured by DSC (scan rate of 10 °C/min; second heating step) in the range of 162 to 169 °C, more preferably said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha nucleated polypropylene composition (n-PP) has

(i) a melt flow rate $MFR_2$ (230 °C; 2.16 kg), measured according to ISO 1133, in the range of 40 to 190 g/10min,
(ii) a molecular weight distribution (MWD) determined by Gel Permeation Chromatography (GPC) in the range of 3.5 to 6.5,
(iii) 2,1 erythro regio-defects in the range of >0.35 to 0.85 mol-% measured by $^{13}C$ NMR, and
(iv) a comonomer content of not more than 0.75 mol-%, wherein the comonomer is selected from the group consisting of ethylene, 1-butene and 1-hexene,
wherein optionally still further the alpha-nucleated polypropylene composition (n-PP) complies
(v) with equation 2, preferably equation 2a,

$$\frac{MFR\ (n-PP)}{(MFR\ (PP1)\ x\ [(PP1)/(n-PP)])} > 2.30 \quad (2)$$

$$6.00 > \frac{MFR\ (n-PP)}{(MFR\ (PP1)\ x\ [(PP1)/(n-PP)])} > 2.30 \quad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) divided by the amount of the alpha-nucleated

Preferably, the alpha-nucleated polypropylene composition (n-PP) as defined in the previous paragraph is an alpha-nucleated propylene homopolymer or an alpha-nucleated propylene-1-butene copolymer having a 1-butene content in the range of 0.1 to 0.6 mol-%, more preferably the alpha-nucleated polypropylene composition (n-PP) as defined in the previous paragraph is an alpha-nucleated propylene homopolymer.

The alpha-nucleated polypropylene composition (n-PP) is dominated by the first polypropylene (PP1) and the second polypropylene (PP2), as both polymers make up at least 94 wt.-% of the alpha-nucleated polypropylene composition (n-PP). As will be explained below, the first polypropylene (PP1) and the second polypropylene (PP2) are produced together in a sequential polymerization process using a specific metallocene catalyst. The first polypropylene (PP1) is produced in the 1st reactor and subsequently in a second reactor and in the presence of first polypropylene (PP1) the second polypropylene (PP2) is produced. Accordingly as the alpha-nucleated polypropylene composition (n-PP) has as main component the polymerization product of the first polypropylene (PP1) and the second polypropylene (PP2) (at least 94 wt.-%), at least some of final properties are also driven by said two polypropylenes (PP1) and (PP2).

Therefore, as both polypropylenes (PP1) and (PP2) are produced in the presence of a specific metallocene catalyst, the final alpha-nucleated polypropylene composition (n-PP) has a certain amount of 2,1 erythro regio-defects, preferably also a rather low xylene soluble content and a rather high crystallinity in terms of pentad isotacticity [mmmm].

Accordingly, the alpha-nucleated polypropylene composition (n-PP) has 2,1 erythro regio-defects measured by $^{13}C$ NMR in the range of >0.35 to 0.85 mol-%, preferably in the range of 0.50 to 0.85 mol-%.

Further, it is preferred that the alpha-nucleated polypropylene composition (n-PP) has a pentad isotacticity [mmmm] of at least 98.0 %, more preferably of at least 99.0 %, yet more preferably of at least 99.2 %.

Additionally or alternatively to the previous paragraph it is preferred that the alpha-nucleated polypropylene composition (n-PP) has a xylene cold soluble fraction (XCS) measured at 25 °C according to ISO 16152 of not more than 1.0 wt.-%, more preferably in the range of 0.1 to 1.0 wt.-%, still more preferably in the range of 0.4 to 0.9 wt.-%.

Accordingly, the present invention is in particular directed to an alpha-nucleated polypropylene composition (n-PP) comprising, preferably consisting of,

(a) a first polypropylene (PP1) having a melt flow rate $MFR_2$ (230 °C; 2.16 kg), measured according to ISO 1133, in the range of 10 to 100 g/10min,
(b) a second polypropylene (PP2),
(c) 0.01 to 1.0 wt.-%, based on the alpha-nucleated polypropylene composition (n-PP), of an alpha-nucleating agent,
(d) 0.05 to 1.0 wt.-%, based on the alpha-nucleated polypropylene composition (n-PP), of additives being not an alpha-nucleating agent, and
(e) optionally 0.5 to 4.0 wt.-%, based on the alpha-nucleated polypropylene composition (n-PP), of one or more propylene homopolymer(s) being different to the polypropylenes (PP1) and (PP2), wherein said one or more propylene homopolymer(s) has/have a melt flow rate $MFR_2$ (230 °C; 2.16 kg), measured according to ISO 1133, in the range of 1.0 to 25.0 g/10min, preferably said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, more preferably said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) a molecular weight distribution (MWD) determined by Gel Permeation Chromatography (GPC) in the range of 3.5 to 6.5,
(iii) 2,1 erythro regio-defects in the range of >0.35 to 0.85 mol-%, preferably in the range of 0.50 to 0.85 mol-%, measured by $^{13}C$ NMR,
(iv) a pentad isotacticity [mmmm] of at least 99.0 %, preferably of at least 99.2 %, and
(v) a comonomer content of not more than 0.75 mol-%, wherein the comonomer is selected from the group consisting of ethylene, 1-butene and 1-hexene,
wherein optionally still further the alpha-nucleated polypropylene composition (n-PP) complies
(vi) with equation 2, preferably equation 2a,

$$\frac{MFR\,(n-PP)}{(MFR\,(PP1)\;x\;[(PP1)/(n-PP)])} > 2.30 \quad (2)$$

$$6.00 > \frac{MFR\,(n-PP)}{(MFR\,(PP1)\;x\;[(PP1)/(n-PP)])} > 2.30 \quad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) devided by the amount of the alpha-nucleated polypropylene composition (n-PP).

Preferably, the alpha-nucleated polypropylene composition (n-PP) as defined in the previous paragraph is an alpha-nucleated propylene homopolymer or an alpha-nucleated propylene-1-butene copolymer having a 1-butene content in the range of 0.1 to 0.6 mol-%, more preferably the alpha-nucleated polypropylene composition (n-PP) as defined in the previous paragraph is an alpha-nucleated propylene homopolymer.

The polypropylenes (PP1) and (PP2) differ essentially in the melt flow rate otherwise the rather broad molecular weight distribution (MWD) of the alpha-nucleated polypropylene composition (n-PP) in the range of 3.5 to 6.5 would be not possible. It is even more preferred that the molecular weight distribution (MWD) of the alpha-nucleated polypropylene composition (n-PP) is in the range of 4.0 to 5.5. A further consequence of the fact that the polypropylenes (PP1) and (PP2) differ essentially in the melt flow rates is that also the melt flow rate $MFR_2$ of the alpha-nucleated polypropylene composition (n-PP) is essentially higher than the melt flow rate $MFR_2$ of the first polypropylene (PP1). Hence, it is preferred that the alpha-nucleated polypropylene composition (n-PP) complies with

(a) with equation 2, preferably equation 2a,

$$\frac{MFR\ (n-PP)}{(MFR\ (PP1)\ x\ [(PP1)/(n-PP)])} > 2.30 \qquad (2)$$

$$6.00 > \frac{MFR\ (n-PP)}{(MFR\ (PP1)\ x\ [(PP1)/(n-PP)])} > 2.30 \qquad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) divided by the amount of the alpha-nucleated polypropylene composition (n-PP)
and optionally

(b) with equation 3, preferably equation 3a,

$$MFR\ (n-PP) - MFR\ (PP1) > 35\ g/10min \qquad (3)$$

$$75\ g/10min > MFR\ (n-PP) - MFR\ (PP1) > 35\ g/10min \qquad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Accordingly, the present invention is in particular directed to an alpha-nucleated polypropylene composition (n-PP) comprising

(a) a first polypropylene (PP1) having a melt flow rate $MFR_2$ (230 °C; 2.16 kg), measured according to ISO 1133, in the range of 10 to 100 g/10min,
(b) a second polypropylene (PP2),
(c) 0.01 to 1.0 wt.-%, based on the alpha-nucleated polypropylene composition (n-PP), of an alpha-nucleating agent,
(d) 0.05 to 1.0 wt.-%, based on the alpha-nucleated polypropylene composition (n-PP), of additives being not an alpha-nucleating agent, and
(e) optionally 0.5 to 4.0 wt.-%, based on the alpha-nucleated polypropylene composition (n-PP), of one or more propylene homopolymer(s) being different to the polypropylenes (PP1) and (PP2), wherein said one or more propylene homopolymer(s) has/have a melt flow rate $MFR_2$ (230 °C; 2.16 kg), measured according to ISO 1133, in the range of 1.0 to 25.0 g/10min, preferably said one or more propylene homopolymer(s) has/have a melt flow rate

$MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, more preferably said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) a molecular weight distribution (MWD) in the range of 3.5 to 5.5, preferably in the range of 4.0 to 5.5,
(iii) 2,1 erythro regio-defects in the range of >0.35 to 0.85 mol-%, preferably in the range of 0.50 to 0.85 mol-%, measured by $^{13}C$ NMR,
(iv) a pentad isotacticity [mmmm] of at least 99.0 %, preferably of at least 99.2 %, and
(v) a comonomer content of not more than 0.75 mol-%, wherein the comonomer is selected from the group consisting of ethylene, 1-butene and 1-hexene,
wherein still further the alpha-nucleated polypropylene composition (n-PP) complies

(i) with equation 2, preferably equation 2a,

$$\frac{MFR\ (n-PP)}{(MFR\ (PP1)\ x\ [(PP1)/(n-PP)])} > 2.30 \qquad (2)$$

$$6.00 > \frac{MFR\ (n-PP)}{(MFR\ (PP1)\ x\ [(PP1)/(n-PP)])} > 2.30 \qquad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) divided by the amount of the alpha-nucleated polypropylene composition (n-PP)
and optionally

(ii) with equation 3, preferably equation 3a,

$$MFR\ (n-PP) - MFR\ (PP1) > 35\ g/10min \qquad (3)$$

$$75\ g/10min > MFR\ (n-PP) - MFR\ (PP1) > 35\ g/10min \qquad (3)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Preferably, the alpha-nucleated polypropylene composition (n-PP) as defined in the previous paragraph is an alpha-nucleated propylene homopolymer or an alpha-nucleated propylene-1-butene copolymer having a 1-butene content in the range of 0.1 to 0.6 mol-%, more preferably the alpha-nucleated polypropylene composition (n-PP) as defined in the previous paragraph is an alpha-nucleated propylene homopolymer.

As mentioned above, the alpha-nucleated polypropylene composition (n-PP) essentially consists of the first polypropylene (PP1) and the second polypropylene (PP2). Further, the comonomer content of the alpha-nucleated polypropylene composition (n-PP) is not more than 0.75 mol-%. Thus, the highest amount of comonomer in one of the two polypropylenes (PP1) and (PP2) can be 3 mol-% assuming the other is a propylene homopolymer. Actually, it is the second polypropylene (PP2) which only can have such an high amount. However, a content of 3 mol-% of comonomer means that the polypropylene is still crystalline. In other words, the alpha-nucleated polypropylene composition (n-PP) mainly contains two crystalline polypropylenes. Therefore, the alpha-nucleated polypropylene composition (n-PP) contains two polypropylenes which are miscible. Thus, it is preferred that the alpha-nucleated polypropylene composition (n-PP) is monophasic. In other words, the $\alpha$-nucleated polypropylene composition (n-PP) does not comprise polymer components which are not miscible with each other, as this is the case for heterophasic propylene copolymers. In contrast to monophasic systems, heterophasic systems comprise a continuous polymer phase, like a polypropylene, in which a further non-miscible polymer, like an elastomeric polymer, is dispersed as inclusions. Said polypropylene systems containing a polypropylene matrix and inclusions as a second polymer phase would by contrast be called heterophasic and are not part of the present invention. The presence of second polymer phases or the so-called inclusions is for instance visible by high resolution microscopy, like electron microscopy or atomic force microscopy, or by dynamic mechanical thermal analysis (DMTA). Specifically in DMTA, the presence of a multiphase structure can be identified by the presence of at least two distinct glass transition temperatures.

Accordingly, the present invention is in particular directed to an alpha-nucleated monophasic polypropylene composition (n-PP) comprising

(a) a first polypropylene (PP1) having a melt flow rate $MFR_2$ (230 °C; 2.16 kg), measured according to ISO 1133, in the range of 10 to 100 g/10min,
(b) a second polypropylene (PP2),
(c) 0.01 to 1.0 wt.-%, based on the alpha-nucleated polypropylene composition (n-PP), of an alpha-nucleating agent,
(d) 0.05 to 1.0 wt.-%, based on the alpha-nucleated polypropylene composition (n-PP), of additives being not an alpha-nucleating agent, and
(e) optionally 0.5 to 4.0 wt.-%, based on the alpha-nucleated polypropylene composition (n-PP), of one or more propylene homopolymer(s) being different to the polypropylenes (PP1) and (PP2), wherein said one or more propylene homopolymer(s) has/have a melt flow rate $MFR_2$ (230 °C; 2.16 kg), measured according to ISO 1133, in the range of 1.0 to 25.0 g/10min, preferably said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, more preferably said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) a molecular weight distribution (MWD) in the range of 3.5 to 5.5, preferably in the range of 4.0 to 5.5,
(iii) 2,1 erythro regio-defects in the range of >0.35 to 0.85 mol-%, preferably in the range of 0.50 to 0.85 mol-%, measured by $^{13}C$ NMR,
(iv) a pentad isotacticity [mmmm] of at least 99.0 %, preferably of at least 99.2 %, and
(v) a comonomer content of not more than 0.75 mol-%, wherein the comonomer is selected from the group consisting of ethylene, 1-butene and 1-hexene,
wherein still further the alpha-nucleated polypropylene composition (n-PP) complies

(vi) with equation 2, preferably equation 2a,

$$\frac{MFR\ (n-PP)}{(MFR\ (PP1)\ x\ [(PP1)/(n-PP)])} > 2.30 \qquad (2)$$

$$6.00 > \frac{MFR\ (n-PP)}{(MFR\ (PP1)\ x\ [(PP1)/(n-PP)])} > 2.30 \qquad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) divided by the amount of the alpha-nucleated polypropylene composition (n-PP)
and optionally

(vii) with equation 3, preferably equation 3a,

$$MFR\ (n-PP) - MFR\ (PP1) > 35\ g/10min \qquad (3)$$

$$75\ g/10min > MFR\ (n-PP) - MFR\ (PP1) > 35\ g/10min \qquad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Preferably, the alpha-nucleated polypropylene composition (n-PP) as defined in the previous paragraph is an alpha-nucleated propylene homopolymer or an alpha-nucleated propylene-1-butene copolymer having a 1-butene content in the range of 0.1 to 0.6 mol-%, more preferably the alpha-nucleated polypropylene composition (n-PP) as defined in the previous paragraph is an alpha-nucleated propylene homopolymer.

The alpha-nucleated polypropylene composition (n-PP) according to this invention can be defined further by its melting and crystallization behavior. The alpha-nucleated polypropylene composition (n-PP) according to this invention is characterized in particular by a relatively small gap between melting and crystallization temperature. For defining the melting and crystallization temperature always the highest melting peak temperature $T_{p,m}$ measured by DSC (scan rate of 10 °C/min; second heating step) and the highest crystallization peak temperature $T_{p,c}$ measured by DSC (scan rate of 10 °C/min; cooling step) is used. Thereby it is especially preferred that the alpha-nucleated polypropylene composition (n-PP) has a highest melting peak temperature $T_{p,m}$ which is rather high for metallocene produced polypropylenes. Accordingly, it is preferred that the alpha-nucleated polypropylene composition (n-PP) according to this invention has

(a) the highest melting peak temperature $T_{p,m}$ measured by DSC (scan rate of 10 °C/min; second heating step) in the range of 156 to 160 °C, and
(b) the highest crystallization peak temperature $T_{p,c}$ measured by DSC (scan rate of 10 °C/min; cooling step) in the range of 127 to 135 °C,

wherein further the nucleated polypropylene composition (n-PP) complies with the equation 1, preferably equation 1a,

$$22\ °C < Tp,m - Tp,c < 33\ °C \qquad (1)$$

$$23\ °C < Tp,m - Tp,c < 30\ °C \qquad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step).

Thus, the invention is especially directed to an alpha-nucleated polypropylene composition (n-PP) comprising

(a) a first polypropylene (PP1) having a melt flow rate $MFR_2$ (230 °C; 2.16 kg), measured according to ISO 1133, in the range of 10 to 100 g/10min,
(b) a second polypropylene (PP2), and
(c) an alpha-nucleating agent,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) the highest melting peak temperature $T_{p,m}$ measured by DSC (scan rate of 10 °C/min; second heating step) in the range of 156 to 160 °C,
(iii) the highest crystallization peak temperature $T_{p,c}$ measured by DSC (scan rate of 10 °C/min; cooling step) in the range of 127 to 135 °C,
(iv) a molecular weight distribution (MWD) in the range of 3.5 to 5.5, preferably in the range of 4.0 to 5.5,
(v) 2,1 erythro regio-defects in the range of >0.35 to 0.85 mol-%, preferably in the range of 0.50 to 0.85 mol-%, measured by $^{13}C$ NMR,
(vi) a comonomer content of not more than 0.75 mol-%, wherein the comonomer is selected from the group consisting of ethylene, 1-butene and 1-hexene,
wherein further the nucleated polypropylene composition (n-PP) complies
(vii) with the equation 1, preferably equation 1a,

$$22\ ^\circ C < Tp,m - Tp,c < 33\ ^\circ C \quad (1)$$

$$23\ ^\circ C < Tp,m - Tp,c < 30\ ^\circ C \quad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step),
wherein optionally still further the alpha-nucleated polypropylene composition (n-PP) complies

(viii) with equation 2, preferably equation 2a,

$$\frac{MFR\ (n-PP)}{(MFR\ (PP1)\ x\ [(PP1)/(n-PP)])} > 2.30 \quad (2)$$

$$6.00 > \frac{MFR\ (n-PP)}{(MFR\ (PP1)\ x\ [(PP1)/(n-PP)])} > 2.30 \quad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) divided by the amount of the alpha-nucleated polypropylene composition (n-PP)

(ix) and optionally with equation 3, preferably equation 3a,

$$MFR\,(n-PP) - MFR\,(PP1) > 35\ g/10min \qquad (3)$$

$$75\ g/10min > MFR\,(n-PP) - MFR\,(PP1) > 35\ g/10min \qquad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Preferably, the alpha-nucleated polypropylene composition (n-PP) as defined in the previous paragraph is monophasic, even more preferably the alpha-nucleated polypropylene composition (n-PP) as defined in the previous paragraph is monophasic and is an alpha-nucleated propylene homopolymer or an alpha-nucleated propylene-1-butene copolymer having a 1-butene content in the range of 0.1 to 0.6 mol-%, most preferably the alpha-nucleated polypropylene composition (n-PP) as defined in the previous paragraph is monophasic and is an alpha-nucleated propylene homopolymer.

Accordingly, the present invention is in particular directed to an alpha-nucleated polypropylene composition (n-PP) comprising

(a) a first polypropylene (PP1) having a melt flow rate $MFR_2$ (230 °C; 2.16 kg), measured according to ISO 1133, in the range of 10 to 100 g/10min,
(b) a second polypropylene (PP2),
(c) 0.01 to 1.0 wt.-%, based on the alpha-nucleated polypropylene composition (n-PP), of an alpha-nucleating agent,
(d) 0.05 to 1.0 wt.-%, based on the alpha-nucleated polypropylene composition (n-PP), of additives being not an alpha-nucleating agent, and
(e) optionally 0.5 to 4.0 wt.-%, based on the alpha-nucleated polypropylene composition (n-PP), of one or more propylene homopolymer(s) being different to the polypropylenes (PP1) and (PP2), wherein said one or more propylene homopolymer(s) has/have a melt flow rate $MFR_2$ (230 °C; 2.16 kg), measured according to ISO 1133, in the range of 1.0 to 25.0 g/10min, preferably said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, more preferably said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) the highest melting peak temperature $T_{p,m}$ measured by DSC (scan rate of 10 °C/min; second heating step) in the range of 156 to 160 °C,
(iii) the highest crystallization peak temperature $T_{p,c}$ measured by DSC (scan rate of 10 °C/min; cooling step) in the range of 127 to 135 °C,
(iv) a molecular weight distribution (MWD) in the range of 3.5 to 5.5, preferably in the range of 4.0 to 5.5,
(v) 2,1 erythro regio-defects in the range of >0.35 to 0.85 mol-%, preferably in the range of 0.50 to 0.85 mol-%, measured by $^{13}C$ NMR,
(vi) a comonomer content of not more than 0.75 mol-%, wherein the comonomer is selected from the group consisting of ethylene, 1-butene and 1-hexene,
wherein further the nucleated polypropylene composition (n-PP) complies
(vii) with the equation 1, preferably equation 1a,

$$22\,°C < Tp,m - Tp,c < 33\,°C \qquad (1)$$

$$23\,°C < Tp,m - Tp,c < 30\,°C \qquad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step),
wherein optionally still further the alpha-nucleated polypropylene composition (n-PP) complies

(viii) with equation 2, preferably equation 2a,

$$\frac{MFR\,(n-PP)}{(MFR\,(PP1)\;x\;[(PP1)/(n-PP)])} > 2.30 \qquad (2)$$

$$6.00 > \frac{MFR\,(n-PP)}{(MFR\,(PP1)\;x\;[(PP1)/(n-PP)])} > 2.30 \qquad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) devided by the amount of the alpha-nucleated polypropylene composition (n-PP)

(ix) and further optionally with equation 3, preferably equation 3a,

$$MFR\,(n-PP) - MFR\,(PP1) > 35\,g/10min \qquad (3)$$

$$75\,g/10min > MFR\,(n-PP) - MFR\,(PP1) > 35\,g/10min \qquad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Preferably, the alpha-nucleated polypropylene composition (n-PP) as defined in the previous paragraph is monophasic, even more preferably the alpha-nucleated polypropylene composition (n-PP) as defined in the previous paragraph is monophasic and is an alpha-nucleated propylene homopolymer or an alpha-nucleated propylene-1-butene copolymer having a 1-butene content in the range of 0.1 to 0.6 mol-%, most preferably the alpha-nucleated polypropylene composition (n-PP) as defined in the previous paragraph is monophasic and is an alpha-nucleated propylene homopolymer.

The alpha-nucleated polypropylene composition (n-PP) according to this invention can be defined further by its high stiffness and low haze.

Accordingly it is preferred that the alpha-nucleated polypropylene composition (n-PP) has a flexural modulus measured according to ISO 178 on injection molded specimens in the range of 1950 to 2250 MPa and/or a haze measured according to ASTM D1003-00 on injection molded plaques of 1 mm thickness of below 10 %, more preferably in the range of 5.0 to below 10.0 %. Thus, all the previously defined embodiments additionaly have a flexural modulus measured according to ISO 178 on injection molded specimens in the range of 1950 to 2250 MPa and optionally a haze measured according to ASTM D1003-00 on injection molded plaques of 1 mm thickness of below 10 %, more preferably in the range of 5.0 to below 10.0 %.

As mentioned above the first polypropylene (PP1) and the second polypropylene (PP2) of the alpha-nucleated polypropylene composition (n-PP) are produced in a sequential polymerization process using a specific metallocene catalyst. Accordingly, the first polypropylene (PP1) and the second polypropylene (PP2) of the alpha-nucleated polypropylene composition (n-PP) must be produced with a metallocene catalyst as disclosed in WO 2019/179959, which is incorporated by reference herewith.

The used metallocene catalyst complexes for the manufacture of the first polypropylene (PP1) and the second polypropylene (PP2) of the alpha-nucleated polypropylene composition (n-PP) is in particular defined by formula (I):

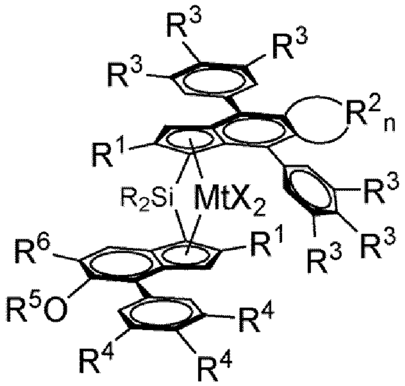

Formula (I)

In a complex of formula (I) it is preferred if Mt is Zr or Hf, preferably Zr; each X is a sigma ligand. Most preferably, each X is independently a hydrogen atom, a halogen atom, $C_1$-$C_6$ alkoxy group or an R' group, where R' is a $C_1$-$C_6$ alkyl, phenyl or benzyl group. Most preferably, X is chlorine, benzyl or a methyl group. Preferably, both X groups are the same. The most preferred options are two chlorides, two methyl or two benzyl groups, especially two chlorides. For further preferred defintions of the residues reference is made to WO 2019/179959.

Specifically preferred metallocene catalyst complexes are:

rac-anti-dimethylsilanediyl[2-methyl-4,8-bis-(4'-tert-butylphenyl)-1,5,6,7-tetrahydro-s-indacen-1 -yl][2-methyl-4-(3',5'-dimethyl-phenyl)-5-methoxy-6-tert-butylinden-1 -yl] zirconium dichloride (MC-1 );
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1 -yl] zirconium dichloride (MC-2);
rac-anti-dimethylsilanediyl[2-methyl-4,8-bis-(3',5'-dimethylphenyl)-1,5,6,7-tetrahydro-s-indacen-1-yl][2-methyl-4-(3',5'-ditert-butyl-phenyl)-5-methoxy-6-tert-butylinden-1-yl] zirconium dichloride (MC-3).

The corresponding zirconium dimethyl analogues of the above defined three catalysts are also possible but less preferred. The most preferred catalyst is the one used for the inventive examples, i.e. MC-2.

Cocatalyst

To form an active catalytic species it is normally necessary to employ a cocatalyst as is well known in the art. Here, a cocatalyst system comprising a boron containing cocatalyst and an aluminoxane cocatalyst is used in combination

with the above defined metallocene catalyst complex.

Typical aluminoxane cocatalysts are state of the art. The preferred aluminoxane is methylaluminoxane (MAO). Since the aluminoxanes used according to the invention as cocatalysts are not, owing to their mode of preparation, pure compounds, the molarity of aluminoxane solutions hereinafter is based on their aluminium content.

As mentioned above the aluminoxane cocatalyst is used in combination with a boron containing cocatalyst.

Boron based cocatalysts of interest include those of formula (Z)

$$BY_3 \qquad (Z)$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5-difluorophenyl, pentachlorophenyl, pentafluorophenyl, 3,4,5-trifluorophenyl and 3,5-di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane. Particular preference is given to tris(pentafluorophenyl)borane.

Preferred ionic compounds which can be used include:

triethylammoniumtetra(phenyl)borate, tributylammoniumtetra(phenyl)borate, trimethylammoniumtetra(tolyl)borate, tributylammoniumtetra(tolyl)borate, tributylammoniumtetra(pentafluorophenyl)borate, tripropylammoniumtetra(dimethylphenyl)borate, tributylammoniumtetra(trifluoromethylphenyl)borate, tributylammoniumtetra(4-fluorophenyl)borate, N,N-dimethylcyclohexylammoniumtetrakis(pentafluorophenyl)borate, N,N-dimethylbenzylammoniumtetrakis(pentafluorophenyl)borate, N,N-dimethylaniliniumtetra(phenyl)borate, N,N-diethylaniliniumtetra(phenyl)borate, N,N-dimethylaniliniumtetrakis(pentafluorophenyl)borate, N,N-di(propyl)ammoniumtetrakis(pentafluorophenyl)borate, di(cyclohexyl)ammoniumtetrakist(pentafluorophenyl)borate, triphenylphosphoniumtetrakis(phenyl)borate, triethylphosphoniumtetrakis(phenyl)borate, diphenylphosphoniumtetrakis(phenyl)borate, tri(methylphenyl)phosphoniumtetrakis(phenyl)borate, tri(dimethylphenyl)phosphoniumtetrakis(phenyl)borate, triphenylcarbeniumtetrakis(pentafluorophenyl)borate, or ferroceniumtetrakis(pentafluorophenyl)borate.

Preference is given to triphenylcarbeniumtetrakis(pentafluorophenyl) borate, N,N-dimethylcyclohexylammoniumtetrakis(pentafluorophenyl)borate or N,N-dimethylbenzylammoniumtetrakis(pentafluorophenyl)borate. Certain boron cocatalysts are especially preferred. Preferred borates comprise the trityl ion. Thus, the use of N,N-dimethylammoniumtetrakispentafluorophenylborate and $Ph_3CB(PhF_5)_4$ and analogues therefore are especially favoured.

It is especially preferred the combination of a borate cocatalyst, like Trityl tetrakis(pentafluorophenyl) borate, and methylaluminoxane (MAO).

Suitable amounts of cocatalyst will be well known to the skilled man.

The molar ratio of boron to the metal ion of the metallocene may be in the range of 0.5:1 to 10:1 mol/mol, preferably in the range of 1:1 to 10:1, especially in the range of 1:1 to 5:1 mol/mol.

The molar ratio of Al in the aluminoxane to the metal ion of the metallocene may be in the range of 1:1 to 2000:1 mol/mol, preferably in the range of 10:1 to 1000:1, and more preferably in the range of 50:1 to 500:1 mol/mol.

Catalyst Manufacture

The metallocene catalyst complex can be used in combination with a suitable cocatalyst as a catalyst for the polymerization of propylene, e.g. in a solvent such as toluene or an aliphatic hydrocarbon, (i.e. for polymerization in solution), as it is well known in the art. Preferably, polymerization of propylene takes place in the condensed phase or in gas phase.

The catalyst of the invention can be used in supported or unsupported form. The particulate support material used is preferably an organic or inorganic material, such as silica, alumina or zirconia or a mixed oxide such as silica-alumina, in particular silica, alumina or silica-alumina. The use of a silica support is preferred. The skilled man is aware of the procedures required to support a metallocene catalyst.

Especially preferably the support is a porous material so that the complex may be loaded into the pores of the

support, e.g. using a process analogous to those described in WO 94/14856, WO 95/12622 and WO 2006/097497. The particle size is not critical but is preferably in the range of 5 to 200 pm, more preferably in the range of 20 to 80 pm. The use of these supports is routine in the art.

Alternatively, no support is used at all. Such a catalyst can be prepared in solution, for example in an aromatic solvent like toluene, by contacting the metallocene (as a solid or as a solution) with the cocatalyst, for example methylaluminoxane or a borane or a borate salt previously dissolved in an aromatic solvent, or can be prepared by sequentially adding the dissolved catalyst components to the polymerization medium.

Also, no external carrier may be used but the catalyst is still presented in solid particulate form. Thus, no external support material, such as inert organic or inorganic carrier, for example silica as described above is employed.

In order to provide the catalyst in solid form but without using an external carrier, it is preferred if a liquid/liquid emulsion system is used. Full disclosure of the necessary process can be found in WO 03/051934, which is herein incorporated by reference.

The most preferred catalyst system is defined in the example section below (single site catalyst system 1 (SSCS1)).

The polymerization conditions in the sequential polymerization of the first polypropylene (PP1) and the second polypropylene (PP2) of the alpha-nucleated polypropylene composition (n-PP) are nothing specific and well known to the skilled person. Typically the first polypropylene (PP1) is produced in a slurry reactor and the second polypropylene (PP2) is produced in a gas phase reactor in the presence of a the first polypropylene (PP1). Regarding such multistage processes a preferred process is a "loop-gas phase"-process, such as developed by Borealis A/S, Denmark (known as BORSTAR® technology) described e.g. in patent literature, such as in EP 0 887 379, WO 92/12182 WO 2004/000899,

WO 2004/111095, WO 99/24478, WO 99/24479, WO 00/68315, WO2015/082379 or in WO2015/011134.

It is well known that prior to the main polymerization a prepolymerization may take place.

The prepolymerisation may be carried out in any type of continuously operating polymerization reactor. The prepolymerisation may be carried out in a slurry polymerization or a gas phase polymerization reactor, preferably in a loop prepolymerisation reactor.

In a preferred embodiment, the prepolymerisation is conducted as bulk slurry polymerization in liquid propylene, i.e. the liquid phase mainly comprises propylene, with minor amount of other reactants and optionally inert components dissolved therein.

The prepolymerisation is carried out in a continuously operating reactor at an average residence time of 5 minutes up to 90 min. Preferably the average residence time is within the range of 10 to 60 minutes and more preferably within the range of 15 to 45 minutes.

The prepolymerisation reaction is typically conducted at a temperature of 0 to 50 °C, preferably from 10 to 45 °C, and more preferably from 15 to 35 °C.

The pressure in the prepolymerisation reactor is not critical but must be sufficiently high to maintain the reaction mixture in liquid phase and is generally selected such that the pressure is higher than or equal to the pressure in the subsequent polymerization. Thus, the pressure may be from 20 to 100 bar, for example 30 to 70 bar.

In case a prepolymerisation step is performed, all of the catalyst mixture is introduced to the prepolymerisation step.

The precise control of the prepolymerisation conditions and reaction parameters is within the skill of the art.

As mentioned above the first polypropylene (PP1) is preferably produced in a slurry phase polymerization step, i.e. in the liquid phase.

The temperature in the slurry polymerization is typically from 50 to 110 °C, preferably from 60 to 100 °C and in particular from 65 to 95 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Loop reactors are generally known in the art and examples are given, for instance, in US-A-4582816, US-A-3405109, US-A-3324093, EP-A-479186 and US-A-5391654.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be in the range from 1 to 8 hours, like from 1.5 to 4 hours.

Into the slurry polymerization stage other components may also be introduced as it is known in the art. Thus, hydrogen is added to control the molecular weight of the polymer.

The slurry polymerization stage is followed by the gas phase polymerization stage in which the second polypropylene (PP2) is produced. It is preferred to conduct the slurry directly into the gas phase polymerization zone without a flash step between the stages. This kind of direct feed is described in EP-A-887379, EP-A-887380, EP-A-887381 and EP-A-991684.

That is, the reaction product of the slurry phase polymerization, i.e. the first polypropylene (PP1), which preferably is carried out in a loop reactor, is then transferred to the subsequent gas phase reactor in which the second polypropylene

(PP2) is produced .

The polymerization in gas phase may be conducted in fluidized bed reactors, in fast fluidized bed reactors or in settled bed reactors or in any combination of these. When a combination of reactors is used then the polymer is transferred from one polymerization reactor to another. However it is preferred that the second polypropylene (PP2) is produced in one gas phase reactor.

Typically the gas phase reactor is operated at a temperature within the range of from 50 to 100 °C, preferably from 65 to 95 °C. The pressure is suitably from 10 to 40 bar, preferably from 15 to 30 bar

According to this invention the first polypropylene (PP1) is produced in the first step, i.e. in a first reactor, e.g. the loop reactor, whereas the second polypropylene (PP2) is produced in the subsequent step, i.e. in the second reactor, e.g. the gas phase reactor. In case the polymerization process of the first polypropylene (PP1) and the second polypropylene (PP2) contains also a prepolimerization step, then the first polypropylene (PP1) according to this invention is the polymer produced in the prepolymerization together with the polymer produced in the subsequent first step, in the first reactor, e.g. the loop reactor, whereas the second polypropylene (PP2) is the product of the second reactor, e.g. the gas phase reactor. The amount of polymer produced in the prepolymerization step is comparatively small compared to the quantities produced in the first reactor and therefore has no great influence on the properties of the polypropylene from the first reactor.

The first polypropylene (PP1) has a melt flow rate $MFR_2$ (230 °C; 2.16 kg), measured according to ISO 1133, in the range of 10 to 100 g/10min, preferably in the range of 15 to 90 g/10min, like in the range of 18 to 80 g/10min.

Further it is required that the alpha-nucleated polypropylene composition (n-PP) in case it contains a comonomer then the comonomer is selected from the group consisting of ethylene, 1-butene and 1-hexene. Further the comonomer content shall be in the alpha-nucleated polypropylene composition (n-PP) not more than 0.75 mol.-%. Accordingly the first polypropylene (PP1) may contain a comonomer selected from the group consisting of ethylene, 1-butene and 1-hexene as well. However the comonomer content of the first polypropylene (PP1) is not more than 1.25 mol-%. It is especially preferred that the first polypropylene (PP1) is a propylene homopolymer or a propylene-1-butene copolymer having a 1-butene content in the range of 0.1 to 0.6 mol-%. It is in particular preferred that the first polypropylene (PP1) is a propylene homopolymer.

Accordingly it is especially preferred that the first polypropylene (PP1) is a propylene homopolymer having a melt flow rate $MFR_2$ (230 °C; 2.16 kg), measured according to ISO 1133, in the range of 10 to 100 g/10min. It is in particular preferred that the first polypropylene (PP1) is a propylene homopolymer having a melt flow rate $MFR_2$ (230 °C; 2.16 kg), measured according to ISO 1133, in the range of 15 to 90 g/10min, like in the range of 18 to 80 g/10min.

Similar to the first polypropylene (PP1), the second polypropylene (PP2) may contain a comonomer. In such a case the comonomer is selected from the group consisting of ethylene, 1-butene and 1-hexene. Further the comonomer content shall be in the alpha-nucleated polypropylene composition (n-PP) not more than 0.75 mol.-%. Therefore the comonomer content of the second polypropylene (PP2) is not more than 3.0 mol-%. It is especially preferred that the second polypropylene (PP1) is a propylene homopolymer or a propylene-1-butene copolymer having a 1-butene content in the range of 0.1 to 0.6 mol-%. It is in particular preferred that the second polypropylene (PP2) is a propylene homopolymer.

Thus it is especially preferred that the alpha-nucleated polypropylene composition (n-PP) comprises the first polypropylene (PP1) and the second polypropylene (PP2) in a weight ratio in the range of 75/25 to 55/45 wherein the first polypropylene (PP1) has a melt flow rate $MFR_2$ (230 °C; 2.16 kg), measured according to ISO 1133, in the range of 10 to 100 g/10min, preferably in the range of 20 to 90 g/10min, and wherein further the first polypropylene (PP1) and the second polypropylene (PP2) each by itself has a comonomer content in the range of 0.1 to 0.6 mol-% and both polymers contain the same comonomer selected from the group consisting of ethylene, 1-butene and 1-hexene. It is in particular preferred that the alpha-nucleated polypropylene composition (n-PP) comprises the first polypropylene (PP1) and the second polypropylene (PP2) in a weight ratio in the range of 75/25 to 65/45 wherein the first polypropylene (PP1) has a melt flow rate $MFR_2$ (230 °C; 2.16 kg), measured according to ISO 1133, in the range of 10 to 100 g/10min, preferably in the range of 20 to 90 g/10min, and wherein further the first polypropylene (PP1) and the second polypropylene (PP2) are propylene-1-butene copolymers each of the two polymers has a comonomer content in the range of 0.1 to 0.6 mol-%

It is in particular preferred that the alpha-nucleated polypropylene composition (n-PP) comprises the first polypropylene (PP1) and the second polypropylene (PP2) in a weight ratio in the range of 75/25 to 55/45 wherein the first polypropylene (PP1) has a melt flow rate $MFR_2$ (230 °C; 2.16 kg), measured according to ISO 1133, in the range of 10 to 100 g/10min, preferably in the range of 20 to 90 g/10min, and wherein further the first polypropylene (PP1) and the second polypropylene (PP2) are both propylene homopolymers.

The melt flow rate $MFR_2$ (230 °C; 2.16 kg) of the alpha-nucleated polypropylene composition (n-PP) differs essentially from the melt flow rate $MFR_2$ (230 °C; 2.16 kg) of the first polypropylene (PP1). Accordingly the alpha-nucleated polypropylene composition (n-PP) complies with equation 3, preferably equation 3a,

$$MFR\ (n-PP) - MFR\ (PP1) > 35\ g/10min \qquad (3)$$

$$75\ g/10min > MFR\ (n-PP) - MFR\ (PP1) > 35\ g/10min \qquad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Accordingly the melt flow rate $MFR_2$ (230 °C; 2.16 kg) of the second polypropylene (PP2) must be higher than the melt flow rate $MFR_2$ (230 °C; 2.16 kg) of the first polypropylene (PP1). It is in particular preferred that the melt flow rate $MFR_2$ (230 °C; 2.16 kg) of the second polypropylene (PP2) is in the range of 250 to 2000 g/10min, preferably in the range of 300 to 1800 g/10min. These values are calculated as mentioned in the experimental part.
Thus it is especially preferred that the alpha-nucleated polypropylene composition (n-PP) comprises the first polypropylene (PP1) and the second polypropylene (PP2) in a weight ratio in the range of 75/25 to 55/45 wherein the first polypropylene (PP1) has a melt flow rate $MFR_2$ (230 °C; 2.16 kg), measured according to ISO 1133, in the range of 10 to 100 g/10min, preferably in the range of 15 to 90 g/10min, and the second polypropylene (PP2) has a melt flow rate $MFR_2$ (230 °C; 2.16 kg) in the range of 250 to 2000 g/10min, preferably in the range of 300 to 1800 g/10min, and wherein further the first polypropylene (PP1) and the second polypropylene (PP2) each by itself has a comonomer content in the range of 0.1 to 0.6 mol-% and both polymers contain the same comonomer selected from the group consisting of ethylene, 1-butene and 1-hexene. It is in particular preferred that the alpha-nucleated polypropylene composition (n-PP) comprises the first polypropylene (PP1) and the second polypropylene (PP2) in a weight ratio in the range of 75/25 to 55/45 wherein the first polypropylene (PP1) has a melt flow rate $MFR_2$ (230 °C; 2.16 kg), measured according to ISO 1133, in the range of 10 to 100 g/10min, preferably in the range of 15 to 90 g/10min, and the second polypropylene (PP2) has a melt flow rate $MFR_2$ (230 °C; 2.16 kg) in the range of 200 to 2000 g/10min, preferably in the range of 300 to 1800 g/10min, and wherein further the first polypropylene (PP1) and the second polypropylene (PP2) are propylene-1-butene copolymers each of the two polymers has a comonomer content in the range of 0.1 to 0.6 mol-%
It is in particular preferred that the alpha-nucleated polypropylene composition (n-PP) comprises the first polypropylene (PP1) and the second polypropylene (PP2) in a weight ratio in the range of 75/25 to 55/45 wherein the first polypropylene (PP1) has a melt flow rate $MFR_2$ (230 °C; 2.16 kg), measured according to ISO 1133, in the range of 10 to 100 g/10min, preferably in the range of 15 to 90 g/10min, and the second polypropylene (PP2) has a melt flow rate $MFR_2$ (230 °C; 2.16 kg) in the range of 200 to 2000 g/10min, preferably in the range of 300 to 1800 g/10min, and wherein further the first polypropylene (PP1) and the second polypropylene (PP2) are both propylene homopolymers.
Thus the invention is especially directed to an alpha-nucleated polypropylene composition (n-PP) being an alpha-nucleated propylene homopolymer, wherein said alpha-nucleated polypropylene composition (n-PP) comprises

(a) a first polypropylene (PP1) being a propylene homopolymer and having a melt flow rate $MFR_2$ (230 °C; 2.16 kg), measured according to ISO 1133, in the range of 10 to 100 g/10min,
(b) a second polypropylene (PP2) being a propylene homopolymer and optionally having a melt flow rate $MFR_2$ (230 °C; 2.16 kg) in the range of 200 to 2000 g/10min, and
(c) an alpha-nucleating agent,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) the highest melting peak temperature $T_{p,m}$ measured by DSC (scan rate of 10 °C/min; second heating step) in the range of 156 to 160 °C,

(iii) the highest crystallization peak temperature $T_{p,c}$ measured by DSC (scan rate of 10 °C/min; cooling step) in the range of 127 to 135 °C,
(iv) a molecular weight distribution (MWD) in the range of 3.5 to 5.5, preferably in the range of 4.0 to 5.5,
(v) 2,1 erythro regio-defects in the range of >0.35 to 0.85 mol-%, preferably in the range of 0.50 to 0.85 mol-%, measured by $^{13}C$ NMR,
(vi) optionally a pentad isotacticity [mmmm] of at least 99.0 %, preferably of at least 99.2 %, and
(vii) a comonomer content of not more than 0.75 mol-%, wherein the comonomer is selected from the group consisting of ethylene, 1-butene and 1-hexene,

wherein further the nucleated polypropylene composition (n-PP) complies
(x) with the equation 1, preferably equation 1a,

$$22\,°C < Tp,m - Tp,c < 33\,°C \qquad (1)$$

$$23\,°C < Tp,m - Tp,c < 30\,°C \qquad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step),
wherein still further the alpha-nucleated polypropylene composition (n-PP) complies
(xi) with equation 2, preferably equation 2a,

$$\frac{MFR\,(n-PP)}{(MFR\,(PP1)\;x\;[(PP1)/(n-PP)])} > 2.30 \qquad (2)$$

$$6.00 > \frac{MFR\,(n-PP)}{(MFR\,(PP1)\;x\;[(PP1)/(n-PP)])} > 2.30 \qquad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) divided by the amount of the alpha-nucleated polypropylene composition (n-PP)

(xii) and further optionally with equation 3, preferably equation 3a,

$$MFR\,(n-PP) - MFR\,(PP1) > 35\;g/10min \qquad (3)$$

$$75\;g/10min > MFR\,(n-PP) - MFR\,(PP1) > 35\;g/10min \qquad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Preferably, the alpha-nucleated polypropylene composition (n-PP) as defined in the previous paragraph is

monophasic, even more preferably the alpha-nucleated polypropylene composition (n-PP) as defined in the previous paragraph is monophasic and is an alpha-nucleated propylene homopolymer or an alpha-nucleated propylene-1-butene copolymer having a 1-butene content in the range of 0.1 to 0.6 mol-%, most preferably the alpha-nucleated polypropylene composition (n-PP) as defined in the previous paragraph is monophasic and is an alpha-nucleated propylene homopolymer.

Accordingly, the present invention is in particular directed to an alpha-nucleated polypropylene composition (n-PP) being an alpha-nucleated propylene homopolymer, wherein said alpha-nucleated polypropylene composition (n-PP) comprises

(a) a first polypropylene (PP1) being a propylene homopolymer and having a melt flow rate $MFR_2$ (230 °C; 2.16 kg), measured according to ISO 1133, in the range of 10 to 100 g/10min,
(b) a second polypropylene (PP2) being a propylene homopolymer and optionally having a melt flow rate $MFR_2$ (230 °C; 2.16 kg) in the range of 200 to 2000 g/10min, and
(c) 0.01 to 1.0 wt.-%, based on the alpha-nucleated polypropylene composition (n-PP), of an alpha-nucleating agent,
(d) 0.05 to 1.0 wt.-%, based on the alpha-nucleated polypropylene composition (n-PP), of additives being not an alpha-nucleating agent, and
(e) optionally 0.5 to 4.0 wt.-%, based on the alpha-nucleated polypropylene composition (n-PP), of one or more propylene homopolymer(s) being different to the polypropylenes (PP1) and (PP2), wherein said one or more propylene homopolymer(s) has/have a melt flow rate $MFR_2$ (230 °C; 2.16 kg), measured according to ISO 1133, in the range of 1.0 to 25.0 g/10min, preferably said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, more preferably said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) the highest melting peak temperature $T_{p,m}$ measured by DSC (scan rate of 10 °C/min; second heating step) in the range of 156 to 160 °C,
(iii) the highest crystallization peak temperature $T_{p,c}$ measured by DSC (scan rate of 10 °C/min; cooling step) in the range of 127 to 135 °C,
(iv) a molecular weight distribution (MWD) in the range of 3.5 to 5.5, preferably in the range of 4.0 to 5.5,
(v) 2,1 erythro regio-defects in the range of >0.35 to 0.85 mol-%, preferably in the range of 0.50 to 0.85 mol-%, measured by $^{13}C$ NMR,
(vi) optionally a pentad isotacticity [mmmm] of at least 99.0 %, preferably of at least 99.2 %, and
(vii) a comonomer content of not more than 0.75 mol-%, wherein the comonomer is selected from the group consisting of ethylene, 1-butene and 1-hexene,

wherein further the nucleated polypropylene composition (n-PP) complies
(xiii) with the equation 1, preferably equation 1a,

$$22\,^{\circ}C < Tp,m - Tp,c < 33\,^{\circ}C \quad (1)$$

$$23\,^{\circ}C < Tp,m - Tp,c < 30\,^{\circ}C \quad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step),
wherein still further the alpha-nucleated polypropylene composition (n-PP) complies (xiv) with equation 2, preferably equation 2a,

$$\frac{MFR\ (n-PP)}{(MFR\ (PP1)\ x\ [(PP1)/(n-PP)])} > 2.30 \qquad (2)$$

$$6.00 > \frac{MFR\ (n-PP)}{(MFR\ (PP1)\ x\ [(PP1)/(n-PP)])} > 2.30 \qquad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) divided by the amount of the alpha-nucleated polypropylene composition (n-PP)

(xv) and further optionally with equation 3, preferably equation 3a,

$$MFR\ (n-PP) - MFR\ (PP1) > 35\ g/10min \qquad (3)$$

$$75\ g/10min > MFR\ (n-PP) - MFR\ (PP1) > 35\ g/10min \qquad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Preferably, the alpha-nucleated polypropylene composition (n-PP) as defined in the previous paragraph is monophasic, even more preferably the alpha-nucleated polypropylene composition (n-PP) as defined in the previous paragraph is monophasic and is an alpha-nucleated propylene homopolymer or an alpha-nucleated propylene-1-butene copolymer having a 1-butene content in the range of 0.1 to 0.6 mol-%, most preferably the alpha-nucleated polypropylene composition (n-PP) as defined in the previous paragraph is monophasic and is an alpha-nucleated propylene homopolymer.

As mentioned above the alpha-nucleated polypropylene composition (n-PP) must comprise an alpha nucleating agent. Alpha-nucleating agents are well known in the art. Reference is made to the "Plastics Additives Handbook" 6th Edition, pages 967 to 990.

Generally, alpha-nucleating agents promote the formation of crystallization nuclei when a melt of polypropylene is solidified and are thus increasing the crystallization speed and temperature of the alpha-nucleated polypropylene compared to non-alpha-nucleated polypropylene.

The alpha-nucleated polypropylene composition (n-PP) usually contains up to 2.0 wt.-% of alpha-nucleating agent. A lower limit of 0.001 wt.-% of alpha-nucleating agent is preferred. Preferably the polypropylene composition (n-PP) comprises 0.005 to 1.0 wt.-%, more preferably 0.01 to 0.8 wt.-%, yet more preferably 0.1 to 0.8 wt.-%, of alpha-nucleating agent. The weight percent in the afore paragraph refers to the total amount of alpha-nucleating agents present in the alpha-nucleated polypropylene composition (n-PP).

Preferred examples of the alpha-nucleating agents are disclosed in "Pastics Additives Handbook", Hans Zweifel, 6th Edition, p. 967 - 990.

Among all alpha-nucleating agents, aluminium hydroxy-bis[2,4,8,10-tetrakis(1,1-dimethylethyl)-6-hydroxy-12H-dibenzo-[d,g]-dioxa-phoshocin-6-oxidato] based nucleating agents like ADK NA-21, NA-21 E, NA-21 F, etc., sodium-2,2'-methylene-bis(4,6-di-t-butylphenyl)phosphate (ADK NA-11), aluminium-hydroxy-bis[2,2'-methylene-bis(4,6-di-t-butyl-phenyl)-phosphate], sorbitol-based nucleating agents, i.e. di(alkylbenzylidene)sorbitols like 1,3:2,4-25 dibenzylidene sorbitol, 1,3:2,4-di(4-methylbenzylidene) sorbitol, 1,3:2,4-di(4-ethylbenzylidene) sorbitol and 1,3:2,4-Bis(3,4-dimethylbenzylidene) sorbitol, as well as nonitol derivatives, like 1,2,3-trideoxy-4,6;5,7-bis-O-[(4-propylphenyl)methylene] nonitol, and benzene-trisamides like substituted 1,3,5-benzenetrisamides as N,N',N"-tris-tert-butyl-1,3,5-benzenetricarboxamide, N,N',N"-tris-cyclohexyl-1,3,5-benzene-tricarboxamide and N-[3,5-bis-(2,2-dimethyl-propionylamino)-phenyl]-2,2-dimethyl-propionamide, wherein 1,3:2,4-di(4-methylbenzylidene) sorbitol and N-[3,5-bis-(2,2-dimethyl-propionylamino)-phenyl]-2,2-dimethyl-propionamide and polymeric nucleating agents selected from the group consisting of vinylcycloalkane polymers and vinylalkane polymers are particularly preferred.

Especially preferred are soluble nucleating agents like Millad 3988 (1,3:2,4-di(4-ethylbenzylidene) sorbitol and 1,3:2,4-Bis(3,4-dimethylbenzylidene) sorbitol) and Millad NX8000 (1,2,3-trideoxy-4,6;5,7-bis-O-[(4-propylphenyl)methylene] nonitol).

It is in particular preferred that the alpha-nucleating agent(s) present in the alpha-nucleated polypropylene composition (n-PP) is/are selected from the group consisting of poly vinylcyclohexane (p-VCH), 1,2,3-trideoxy-4,6;5,7-bis-O-[(4-propylphenyl)methylene] nonitol and bis-(3,4-dimethylbenzylidene)-sorbitol (DMDBS), wherein further the total amount of the alpha-nucleating agent(s), based on the total amount of the alpha-nucleated polypropylene composition (n-PP), is in the range of 0.1 to 0.8 wt.-%.

Accordingly the present invention is especially directed to an alpha-nucleated polypropylene composition (n-PP) comprising, preferably consisting of,

(a) a first polypropylene (PP1) having a melt flow rate $MFR_2$ (230 °C; 2.16 kg), measured according to ISO 1133, in the range of 10 to 100 g/10min,
(b) a second polypropylene (PP2),
(c) 0.1 to 0.8 wt.-%, based on the alpha-nucleated polypropylene composition (n-PP), of alpha-nucleating agent(s), said alpha-nucleating agent(s) is/are selected from the group consisting of poly vinylcyclohexane (p-VCH), 1,2,3-trideoxy-4,6;5,7-bis-O-[(4-propylphenyl)methylene] nonitol and bis-(3,4-dimethylbenzylidene)-sorbitol (DMDBS),
(d) 0.05 to 1.0 wt.-%, based on the alpha-nucleated polypropylene composition (n-PP), of additives being not an alpha-nucleating agent, and
(e) optionally 0.5 to 4.0 wt.-%, based on the alpha-nucleated polypropylene composition (n-PP), of one or more propylene homopolymer(s) being different to the polypropylenes (PP1) and (PP2), wherein said one or more propylene homopolymer(s) has/have a melt flow rate $MFR_2$ (230 °C; 2.16 kg), measured according to ISO 1133, in the range of 1.0 to 25.0 g/10min, preferably said one or more propylene homopolymer(s) has/have a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, more preferably said one or more propylene homopolymer(s) has/have a melt flow rate $MFR_2$ (230 °C; 2.16 kg), measured according to ISO 1133, in the range of 1.0 to 25.0 g/10min, a highest melting peak temperature $T_{p,m}$ measured by DSC (scan rate of 10 °C/min; second heating step) in the range of 162 to 169 °C and no detectable 2,1 erythro regio-defects measured by $^{13}C$ NMR,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%,

wherein further the alpha-nucleated polypropylene composition (n-PP) has

(i) a melt flow rate $MFR_2$ (230 °C; 2.16 kg), measured according to ISO 1133, in the range of 40 to 190 g/10min,
(ii) the highest melting peak temperature $T_{p,m}$ measured by DSC (scan rate of 10 °C/min; second heating step) in the range of 156 to 160 °C,
(iii) the highest crystallization peak temperature $T_{p,c}$ measured by DSC (scan rate of 10 °C/min; cooling step) in the range of 127 to 135 °C,
(iv) a molecular weight distribution (MWD) in the range of 3.5 to 5.5, preferably in the range of 4.0 to 5.5,
(v) 2,1 erythro regio-defects in the range of >0.35 to 0.85 mol-%, preferably in the range of 0.50 to 0.85 mol-%, measured by $^{13}C$ NMR,
(vi) optionally a pentad isotacticity [mmmm] of at least 99.0 %, preferably of at least 99.2 %, and
(vii) a comonomer content of not more than 0.75 mol-%, wherein the comonomer is selected from the group consisting

of ethylene, 1-butene and 1-hexene,
wherein further the nucleated polypropylene composition (n-PP) complies
(viii) with the equation 1, preferably equation 1a,

$$22\,°C < Tp,m - Tp,c < 33\,°C \quad (1)$$

$$23\,°C < Tp,m - Tp,c < 30\,°C \quad (1a)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step),
wherein still further the alpha-nucleated polypropylene composition (n-PP) complies

(ix) with equation 2, preferably equation 2a,

$$\frac{MFR\ (n-PP)}{(MFR\ (PP1)\ x\ [(PP1)/(n-PP)])} > 2.30 \quad (2)$$

$$6.00 > \frac{MFR\ (n-PP)}{(MFR\ (PP1)\ x\ [(PP1)/(n-PP)])} > 2.30 \quad (2a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) devided by the amount of the alpha-nucleated polypropylene composition (n-PP)

(x) and further optionally with equation 3, preferably equation 3a,

$$MFR\ (n-PP) - MFR\ (PP1) > 35\ g/10min \quad (3)$$

$$75\ g/10min > MFR\ (n-PP) - MFR\ (PP1) > 35\ g/10min \quad (3a)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

Preferably, the alpha-nucleated polypropylene composition (n-PP) as defined in the previous paragraph is monophasic, even more preferably the alpha-nucleated polypropylene composition (n-PP) as defined in the previous paragraph is monophasic and is an alpha-nucleated propylene homopolymer or an alpha-nucleated propylene-1-butene copolymer having a 1-butene content in the range of 0.1 to 0.6 mol-%, most preferably the alpha-nucleated polypropylene composition (n-PP) as defined in the previous paragraph is monophasic and is an alpha-nucleated propylene homopolymer.

The present invention is furthermore directed to thin wall injection molded article consisting of the alpha-nucleated polypropylene composition (n-PP) as defined above, wherein the thin wall injection molded article has a wall

thickness up to 1.0 mm, preferably in the range of 0.1 to 1.0 mm, more preferably in the range of 0.3 to 0.9 mm, yet more preferably in the range of 0.4 to 0.7 mm. The manufacture of thin wall injection molded articles is well known in the art and for instance described in "Polypropylene Handbook" 2nd Edition of Nello Pasquini, pages 441/442.

In the following the present invention is described further by way of examples.

## A. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the isotacticity and regio-regularity of the propylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For propylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\,\% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol\text{-}\% = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * fE$$

The weight percent comonomer incorporation was calculated from the mole fraction:

$$E\ [wt.\text{-}\%] = 100 * (fE * 28.06) / ((fE * 28.06) + ((1\text{-}fE) * 42.08))$$

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The $MFR_2$ of the polypropylene is determined at a temperature of 230 °C and a load of 2.16 kg.

**Calculation** of melt flow rate $MFR_2$ (230 °C) of the second polypropylene (PP2):

$$MFR(PP2) = 10^{\left[\frac{\log(MFR(PP)) - w(PP1)\ x\ \log(MFR(PP1))}{w(PP2)}\right]}$$

wherein

| | |
|---|---|
| w(PP1) | is the weight fraction [in wt.-%] of the first polypropylene (PP1), |
| w(PP2) | is the weight fraction [in wt.-%] of the second polypropylene (PP2), |
| MFR(PP1) | is the melt flow rate $MFR_2$ (230 °C) [in g/10min] the first polypropylene (PP1), |

MFR(PP) is the melt flow rate $MFR_2$ (230 °C) [in g/10min] of the reactor powder of the polypropylene (PP),
MFR(PP2) is the calculated melt flow rate $MFR_2$ (230 °C) [in g/10min] of the second polypropylene (PP2).

**Molecular weight**

Molecular weight averages (Mz, Mw and Mn) and Molecular weight distribution (MWD), i.e. Mw/Mn, were determined by Gel Permeation Chromatography (GPC) according to ISO 16014-4:2003 and ASTM D 6474-99 using the following formulas:

$$M_n = \frac{\sum_{i=1}^{N} A_i}{\sum(A_i/M_i)}$$

$$M_w = \frac{\sum_{i=1}^{N}(A_i\, x\, M_i)}{\sum A_i}$$

$$M_z = \frac{\sum_{i=1}^{N}\left(A_i\, x\, M_i^2\right)}{\sum(A_i/M_i)}$$

where Ai and Mi are the chromatographic peak slice area and polyolefin molecular weight (MW).

A PolymerChar GPC instrument, equipped with infrared (IR) detector was used with 3 × Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 μL of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

**Flexural Modulus**

The Flexural Modulus is determined according to ISO 178 method A (3-point bending test) on 80 mm × 10 mm × 4 mm specimens. Following the standard, a test speed of 2 mm/min and a span length of 16 times the thickness was used. The testing temperature was 23±2° C. Injection moulding was carried out according to ISO 19069-2 using a melt temperature of 200°C for all materials irrespective of material melt flow rate.

**Haze**

Haze was determined according to ASTM D1003-00 on 60x60x1 $mm^3$ plaques injection molded in line with EN ISO 1873-2 using a melt temperature of 230°C.

**DSC analysis, melting peak temperature ($T_{p,m}$) and heat of fusion ($H_f$), crystallization peak temperature ($T_{p,c}$) and heat of crystallization ($H_c$): measured with a TA Instrument**

Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Highest crystallization peak temperature ($T_{p,c}$) and heat of crystallization ($H_c$) are determined from the cooling step, while highest melting peak temperature ($T_{p,m}$) and heat of fusion ($H_f$) are determined from the second heating step.

**The xylene soluble fraction at room temperature (XCS, wt.%):**

The amount of the polymer soluble in xylene was determined at 25 °C according to ISO 16152; 5th edition; 2005-07-01.

**B. Preparation**

Catalyst for the inventive examples

***Catalyst complex***

The following metallocene complex has been used as described in WO 2019/179959:

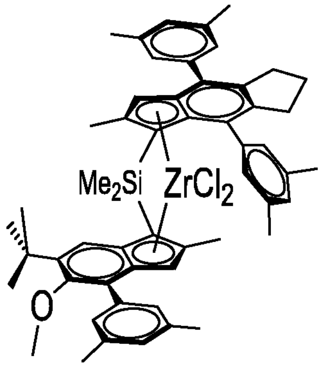

Preparation of MAO-silica support

A steel reactor equipped with a mechanical stirrer and a filter net was flushed with nitrogen and the reactor temperature was set to 20°C. Next silica grade DM-L-303 from AGC Si-Tech Co, pre-calcined at 600°C (5.0 kg) was added from a feeding drum followed by careful pressuring and depressurising with nitrogen using manual valves. Then toluene (22 kg) was added. The mixture was stirred for 15 min. Next 30 wt.% solution of MAO in toluene (9.0 kg) from Lanxess was added via feed line on the top of the reactor within 70 min. The reaction mixture was then heated up to 90°C and stirred at 90°C for additional two hours. The slurry was allowed to settle and the mother liquor was filtered off. The catalyst was washed twice with toluene (22 kg) at 90°C, following by settling and filtration. The reactor was cooled off to 60°C and the solid was washed with heptane (22.2 kg). Finally MAO treated $SiO_2$ was dried at 60°C under nitrogen flow for 2 hours and then for 5 hours under vacuum (-0.5 barg) with stirring. MAO treated support was collected as a free-flowing white powder found to contain 12.2% Al by weight.

***Single site catalyst system* 1 *(SSCS1) preparation***

30 wt.% MAO in toluene (0.7 kg) was added into a steel nitrogen blanked reactor via a burette at 20 °C. Toluene (5.4 kg) was then added under stirring. The metallocene complex as described above under 2a) (93 g) was added from a metal cylinder followed by flushing with 1 kg toluene. The mixture was stirred for 60 minutes at 20°C. Trityl tetrakis(pentafluorophenyl) borate (91 g) was then added from a metal cylinder followed by a flush with 1 kg of toluene. The mixture was stirred for 1 h at room temperature. The resulting solution was added to a stirred cake of MAO-silica support prepared as described above over 1 hour. The cake was allowed to stay for 12 hours, followed by drying under $N_2$ flow at 60°C for 2 h and additionally for 5 h under vacuum (-0.5 barg) under stirring stirring.

Dried catalyst was sampled in the form of pink free flowing powder containing 13.9% Al and 0.11% Zr.

***Single site catalyst system* 2 *(SSCS2) preparation***

Single site catalyst system 2 (SSCS2) has been prepared according to comparative example (CCS4) of WO 2020/239602A1.

**Table 1: Polymerization conditions**

| **Polymer** | | Poly1 | Poly2 | Poly3 | Poly4 | Poly5 | Poly6 |
|---|---|---|---|---|---|---|---|
| Catalyst | | SSCS1 | SSCS1 | SSCS2 | SSCS1 | SSCS1 | SSCS1 |

(continued)

| | | | | | | | |
|---|---|---|---|---|---|---|---|
| **Prepoly reactor** | | | | | | | |
| Temp. | [°C] | 20 | 20 | 20 | 20 | 20 | 20 |
| Press. | [kPa] | 5477 | 5460 | 5312 | 5203 | 5494 | 5507 |
| Residence time | [h] | 0.38 | 0.38 | 0.40 | 0.40 | 0.4 | 0.3 |
| **Loop reactor** | | | | | | | |
| Temp. | [°C] | 75 | 75 | 75 | 75 | 68 | 65 |
| Press. | [kPa] | 5392 | 5372 | 5404 | 5381 | 5470 | 5478 |
| Residence time | [h] | 0.5 | 0.5 | 0.5 | 0.7 | 0.3 | 0.3 |
| Feed H2/C3 ratio | [mol/kmol] | 0.38 | 0.40 | 0.30 | 0.40 | 0.21 | 0.23 |
| Feed C4/C3 ratio | [mol/kmol] | 0.00 | 5.56 | 0.00 | 0.00 | 0.00 | 0.00 |
| Polymer Split* | [wt.-%] | 67 | 69 | 52 | 100 | 63 | 62 |
| $MFR_2$" | [g/10 min] | 72.8 | 64.9 | 68.9 | | 20.1 | 23.9 |
| Total C4* | [wt.-%] | 0.0 | 0.5 | 0.0 | 0.0 | 0.0 | 0.0 |
| Total C4* | [mol-%] | 0.0 | 0.38 | 0.0 | 0.0 | 0.0 | 0.0 |
| XCS* | [wt.-%] | 0.5 | 0.6 | 0.9 | | 0.79 | 0.78 |
| **GPR (PP2)** | | | | | nu | | |
| Temp. | [°C] | 80 | 80 | 80 | | 83 | 82 |
| Press. | [kPa] | 2500 | 2500 | 2500 | | 2500 | 2500 |
| Residence time | [h] | 2.5 | 2.5 | 2.5 | | 2.5 | 2.5 |
| H2/C3 ratio | [mol/kmol] | 27.00 | 26.40 | 2.10 | | 1.2 | 15.8 |
| C4/C3 ratio | [mol/kmol] | 0.0 | 5.0 | 0.0 | | 0 | 0 |
| Polymer Split | [wt.-%] | 33 | 31 | 48 | 0 | 37 | 35 |
| C4** | [wt.-%] | 0.0 | 0.2 | 0.0 | | 0.0 | 0.0 |
| C4** | [mol-%] | 0.0 | 0.15 | 0.0 | | 0.0 | 0.0 |
| $MFR_2$*** | [g/10 min] | 375 | 1505 | 67 | | 386 | 557 |
| **Pellet** | | | | | | | |
| $MFR_2$ | [g/10 min] | 125 | 172 | 68 | 85 | 60 | 79 |
| Total C4 | [wt.-%] | 0.0 | 0.4 | 0.0 | 0.0 | 0 | 0 |
| Total C4 | [mol-%] | 0.0 | 0.3 | 0.0 | 0.0 | 0 | 0 |
| XCS | [wt.-%] | 0.84 | 0.79 | 0.57 | 0.75 | 0.73 | 0.72 |

* "$MFR_2$", "Total C4", "XCS" and "Polymer Split" are measured in the loop reactor, i.e. is the combination of Prepoly Reactor and Loop reactor and considered as the first polypropylene (PP1)
** "C4" is calculated from the "Total C4" measured in the loop reactor and "Total C4" measured from the pellet

(continued)

| Pellet | | | | | | | | |
|---|---|---|---|---|---|---|---|---|
| *** "$MFR_2$" is calculated from the $MFR_2$ measured in the loop reactor and the $MFR_2$ of the pellet using the formula given above defining the measurement of $MFR_2$ "nu" not in use | | | | | | | | |

**Table 2: Alpha-nucleated polypropylene composition (n-PP)**

| | | IE1 | IE2 | IE3 | IE4 | IE5 | IE6 | CE1 | CE2 |
|---|---|---|---|---|---|---|---|---|---|
| Poly1 | [wt.-%] | 99.55 | 97.55 | 99.35 | 0 | - | - | - | - |
| Poly2 | [wt.-%] | - | - | - | 97.55 | - | - | - | - |
| Poly3 | [wt.-%] | - | - | - | - | - | - | 97.55 | - |
| Poly4 | [wt.-%] | - | - | - | - | - | - | - | 99.35 |
| Poly5 | [wt.-%] | - | - | - | - | 99.65 | - | - | - |
| Poly6 | [wt.-%] | - | - | - | - | - | 99.65 | - | - |
| AN1 | [wt.-%] | 0.30 | 0.30 | 0.50 | 0.30 | - | - | 0.30 | 0.50 |
| AN2 | [wt.-%] | - | - | - | - | 0.20 | 0.20 | - | - |
| GE | [wt.-%] | 0.10 | 0.10 | 0.10 | 0.10 | 0.10 | 0.10 | 0.10 | 0.10 |
| AO | [wt.-%] | 0.05 | 0.05 | 0.05 | 0.05 | 0.05 | 0.05 | 0.05 | 0.05 |
| HF955MO | [wt.-%] | - | 2.00 | - | 2.00 | - | - | 2.00 | - |
| | | | | | | | | | |
| XCS | [wt.-%] | 0.84 | 0.85 | 0.84 | 0.80 | 0.75 | 0.72 | 0.58 | 0.75 |
| 2,1 erythro | [mol-%] | 0.70 | 0.64 | 0.71 | 0.63 | 0.71 | 0.72 | 0.98 | 0.65 |
| mmmm | [%] | 99.6 | 99.6 | 99.6 | 99.5 | 99.32 | 99.23 | 99.3 | 99.5 |
| MWD | [-] | 4.8 | 4.8 | 4.8 | 4.6 | 5.5 | 6.1 | 3.1 | 2.8 |
| $MFR_2$ | [g/10min] | 138 | 119 | 138 | 136 | 60 | 79 | 65 | 77 |
| $T_{p,c}$ | [°C] | 130 | 130 | 130 | 129 | 130 | 130 | 126 | 128 |
| $T_{p,m}$ | [°C] | 158 | 158 | 158 | 157 | 156 | 156 | 154 | 156 |
| $T_{p,m} - T_{p,c}$ | [°C] | 28 | 28 | 28 | 28 | 26 | 26 | 28 | 28 |
| FM | [MPa] | 2070 | 2077 | 2114 | 2036 | 2014 | 2074 | 1780 | 1835 |
| Haze | [%] | 8.4 | 8.5 | 5.6 | 8.4 | 12.8 | 12.8 | 7.5 | 5.0 |
| FM/Haze | [MPa/%] | 246.4 | 244.4 | 377.5 | 242.4 | 157.3 | 162.0 | 237.3 | 367.0 |

**Table 3: Alpha-nucleated polypropylene composition (n-PP); Equation 2**

| | | IE1 | IE2 | IE3 | IE4 | IE5 | IE6 | CE1 | CE2 |
|---|---|---|---|---|---|---|---|---|---|
| | | Poly1 | Poly1 | Poly1 | Poly2 | Poly5 | Poly6 | Poly3 | Poly4 |
| Poly | [wt.-%] | 99.55 | 97.55 | 99.35 | 97.55 | 99.65 | 99.65 | 97.55 | 99.35 |
| PP1 ($MFR_2$) | [g/10min] | 72.8 | 72.8 | 72.8 | 64.9 | 20.1 | 23.9 | 68.9 | 85 |
| PP1 (amount)* | [wt.-%] | 67 | 67 | 67 | 69 | 20.1 | 23.9 | 52 | 100 |
| (PP1)/(n-PP) | [-] | 0.667 | 0.654 | 0.666 | 0.673 | 0.628 | 0.618 | 0.508 | 0.987 |
| $MFR_2$ | [g/10min] | 138 | 119 | 138 | 136 | 60 | 79 | 65 | 77 |

(continued)

| | | IE1 | IE2 | IE3 | IE4 | IE5 | IE6 | CE1 | CE2 |
|---|---|---|---|---|---|---|---|---|---|
| | | Poly1 | Poly1 | Poly1 | Poly2 | Poly5 | Poly6 | Poly3 | Poly4 |
| Equation 2 | [-] | 2.84 | 2.50 | 2.85 | 3.11 | 4.75 | 5.35 | 1.86 | 0.92 |
| * amount of PP1 in the polypropylene according to table 1 | | | | | | | | | |

The results of Tables 2 and 3 clearly show the superiority of the inventive over the comparative examples in terms of combining high stiffness, high transparency, low solubles content and good processability expressed by both a high melt flow rate and a limited difference between melting and crystallization temperature. This inventive effect is achieved by combining a suitable single-site catalyst with a bimodal design of the molecular weight distribution by producing polymers of different melt flow rates in the consecutive polymerization stages, i.e. loop and gas-phase reactors.

"AN1" is the commercial alpha-nucleating agent Millad NX8000 of Milliken containing 1,2,3-trideoxy-4,6:5,7-bis-O-((4-propylphenyl) methylene) nonitol;
"AN2" is the commercial alpha-nucleating agent Millad 3988 of Milliken containing bis-(3,4-dimethylbenzylidene)-sorbitol (DMDBS);
"GE" is a Glycerol ester of the formula $HOCH_2-CH(OH)-CH_2-O-C(=O)-(CH_2)_{16}-CH_3$;
"AO" is an antioxidant package consisting of 1 part of Pentaerythrityl-tetrakis(3-(3',5'-di-tert. butyl-4-hydroxyphenyl)-propionate and 2 parts of Tris (2,4-di-t-butylphenyl) phosphite; "HF955MO" is a commercial polypropylene homopolymer of Borealis AG having a melt flow rate MFR2 (230 °C; 2.16 kg), measured according to ISO 1133, of 20 g/10min and a highest melting peak temperature $T_{p,m}$ measured by DSC (scan rate of 10 °C/min; second heating step) of 165 °C.

## Claims

**1.** Alpha-nucleated polypropylene composition (n-PP) comprising

(a) a first polypropylene (PP1) having a melt flow rate $MFR_2$ (230 °C; 2.16 kg), measured according to ISO 1133, in the range of 10 to 100 g/10min,
(b) a second polypropylene (PP2), and
(c) an alpha-nucleating agent,

wherein

- the weight ratio between the first polypropylene (PP1) and the second polypropylene (PP2) [(PP1)/(PP2)] is in the range of 75/25 to 55/45, and
- the total amount of the first polypropylene (PP1) and the second polypropylene (PP2) together, based on the alpha-nucleated polypropylene composition (n-PP), is at least 94 wt.-%;

wherein further the alpha-nucleated polypropylene composition (n-PP) has

(i) a melt flow rate $MFR_2$ (230 °C; 2.16 kg), measured according to ISO 1133, in the range of 40 to 190 g/10min;
(ii) a molecular weight distribution (MWD) determined by Gel Permeation Chromatography (GPC) in the range of 3.5 to 6.5;
(iii) 2,1 erythro regio-defects in the range of >0.35 to 0.85 mol-% measured by $^{13}C$ NMR; and
(iv) a comonomer content of not more than 0.75 mol-%, wherein the comonomer is selected from the group consisting of ethylene, 1-butene and 1-hexene.

**2.** Alpha-nucleated polypropylene composition (n-PP) according to claim 1 having

(a) the highest melting peak temperature $T_{p,m}$ measured by DSC (scan rate of 10 °C/min; second heating step) in the range of 156 to 160 °C, and
(b) the highest crystallization peak temperature $T_{p,c}$ measured by DSC (scan rate of 10 °C/min cooling step) in the range of 127 to 135 °C,

wherein further the nucleated polypropylene composition (n-PP) complies with the equation 1

$$22\ °C < Tp,m - Tp,c < 33\ °C \quad (1)$$

wherein

"$T_{p,m}$" is the highest melting peak temperature $T_{p,m}$ [°C] measured by DSC (scan rate of 10 °C/min; second heating step) and
"$T_{p,c}$" is the highest crystallization peak temperature $T_{p,c}$ [°C] measured by DSC (scan rate of 10 °C/min; cooling step).

**3.** Alpha-nucleated polypropylene composition (n-PP) according to claim 1 or 2 complying with equation 2

$$\frac{MFR\ (n-PP)}{(MFR\ (PP1)\ x\ [(PP1)/(n-PP)])} > 2.30 \quad (2)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1);
"[(PP1)/(n-PP)]" is the amount of the first polypropylene (PP1) in the alpha-nucleated polypropylene composition (n-PP) devided by the amount of the alpha-nucleated polypropylene composition (n-PP).

**4.** Alpha-nucleated polypropylene composition (n-PP) according to any one of the preceding claims complying with equation 3

$$MFR\ (n-PP) - MFR\ (PP1) > 35\ g/10min \quad (3)$$

wherein

"MFR (n-PP)" is the melt flow rate $MFR_2$ (230 °C; 2.16 kg), measured according to ISO 1133, of the alpha-nucleated polypropylene composition (n-PP);
"MFR (PP1)" is the melt flow rate $MFR_2$ (230 °C; 2.16 kg), measured according to ISO 1133, of the first polypropylene (PP1).

**5.** Alpha-nucleated polypropylene composition (n-PP) according to any one of the preceding claims having

(a) a xylene cold soluble fraction (XCS) measured at 25 °C according to ISO 16152 in the range of 0.1 to 1.0 wt.-%, and
(b) optionally a pentad isotacticity [mmmm] of at least 98.0 %.

**6.** Alpha-nucleated polypropylene composition (n-PP) according to any one of the preceding claims having a melt flow rate $MFR_2$ (230 °C; 2.16 kg), measured according to ISO 1133, in the range of 45 to below 150 g/10min.

**7.** Alpha-nucleated polypropylene composition (n-PP) according to any one of the preceding claims, wherein the alpha-nucleated polypropylene composition (n-PP) is monophasic.

**8.** Alpha-nucleated polypropylene composition (n-PP) according to any one of the preceding claims having

(a) a flexural modulus measured according to ISO 178 in the range of 1950 to 2250 MPa, and
(b) optionally a haze measured according to ASTM D1003-00 in the range of 5.0 to below 10.0 %.

**9.** Alpha-nucleated polypropylene composition (n-PP) according to any one of the preceding claims, wherein

(a) the first polypropylene (PP1) and the second polypropylene (PP2) are propylene homopolymers, or
(b) the first polypropylene (PP1) and the second polypropylene (PP2) are propylene-1-butene copolymers having a 1-butene content in the range of the range of 0.1 to 0.6 mol-%.

**10.** Alpha-nucleated polypropylene composition (n-PP) according to any one of the preceding claims, wherein the alpha-nucleated polypropylene composition (n-PP) is an alpha-nucleated propylene homopolymer or an alpha-nucleated propylene-1-butene copolymer having a 1-butene content in the range of 0.1 to 0.6 mol-%, preferably an alpha-nucleated propylene homopolymer.

**11.** Alpha-nucleated polypropylene composition (n-PP) according to any one of the preceding claims, wherein the melt flow rate $MFR_2$ of the second polypropylene (PP2) is in the range of 250 to 2000 g/10min.

**12.** Alpha-nucleated polypropylene composition (n-PP) according to any one of the preceding claims, wherein said composition comprises further one or more propylene homopolymer(s) having a melt flow rate $MFR_2$ (230 °C; 2.16 kg), measured according to ISO 1133, in the range of 1.0 to 25.0 g/10min and a highest melting peak temperature $T_{p,m}$ measured by DSC (scan rate of 10 °C/min; second heating step) in the range of 162 to 169 °C, wherein the total amount of the one or more propylene homopolymer(s), based on the total amount of the alpha-nucleated polypropylene composition (n-PP), is in the range of 0.5 to 4.0 wt.-%.

**13.** Alpha-nucleated polypropylene composition (n-PP) according to any one of the preceding claims containing at least one alpha-nucleating agent selected from the group consisting of polymeric nucleating agent, sorbitol-based nucleating agent, nonitol-based nucleating agent and benzene-trisamide-based nucleating agent, wherein the total amount of alpha-nucleating agent, based on the total amount of the alpha-nucleated polypropylene composition (n-PP), is in the range of 0.001 to 2.0 wt.-%.

**14.** Alpha-nucleated polypropylene composition (n-PP) according to any one of the preceding claims, wherein the alpha-nucleating agent(s) present in the alpha-nucleated polypropylene composition (n-PP) is/are selected from the group consisting of poly vinylcyclohexane (p-VCH), 1,2,3-trideoxy-4,6;5,7-bis-O-[(4-propylphenyl)methylene] nonitol and bis-(3,4-dimethylbenzylidene)-sorbitol (DMDBS), wherein further the total amount of the alpha-nucleating agent(s), based on the total amount of the alpha-nucleated polypropylene composition (n-PP), is in the range of 0.1 to 0.8 wt.-%.

**15.** Thin wall injection molded article comprising, preferably consisting of, the alpha-nucleated polypropylene composition (n-PP) according to any one of the preceding claims, wherein the thin wall injection molded article has a wall thickness up to 1.0 mm.

**Patentansprüche**

**1.** Alpha-nukleierte Polypropylen-Zusammensetzung (n-PP), umfassend

(a) ein erstes Polypropylen (PP1) mit einer Schmelzflussrate $MFR_2$ (230 °C; 2,16 kg), gemessen nach ISO 1133, im Bereich von 10 bis 100 g/10min,
(b) ein zweites Polypropylen (PP2), und
(c) ein alpha-Nukleierungsmittel,

wobei

- das Gewichtsverhältnis zwischen dem ersten Polypropylen (PP1) und dem zweiten Polypropylen (PP2) [(PP1)/(PP2)] im Bereich von 75/25 bis 55/45 liegt, und
- die Gesamtmenge des ersten Polypropylens (PP1) und des zweiten Polypropylens (PP2) zusammen, bezogen auf die alpha-nukleierte Polypropylen-Zusammensetzung (n-PP), mindestens 94 Gew.-% beträgt;

wobei die alpha-nukleierte Polypropylen-Zusammensetzung (n-PP) außerdem

(i) eine Schmelzflussrate $MFR_2$ (230 °C; 2,16 kg), gemessen nach ISO 1133, im Bereich von 40 bis 190 g/10min;
(ii) eine Molekulargewichtsverteilung (MWD), bestimmt durch Gelpermeationschromatographie (GPC), im Bereich von 3,5 bis 6,5;

(iii) 2,1-Erythro-Regio-Defekte im Bereich von >0,35 bis 0,85 Mol-%, gemessen durch $^{13}C$ NMR; und
(iv) einen Comonomergehalt von nicht mehr als 0,75 Mol-%, wobei das Comonomer ausgewählt ist aus der Gruppe bestehend aus Ethylen, 1-Buten und 1-Hexen,

besitzt.

**2.** Alpha-nukleierte Polypropylen-Zusammensetzung (n-PP) nach Anspruch 1, welche

(a) die höchste Schmelzspitzentemperatur $T_{p,m}$, gemessen mittels DSC (Abtastrate von 10 °C/min; zweiter Heizschritt) im Bereich von 156 bis 160 °C, und
(b) die höchste Kristallisationsspitzentemperatur $T_{p,c}$ , gemessen mit DSC (Abtastrate von 10 °C/min Kühlschritt) im Bereich von 127 bis 135 °C hat,
wobei außerdem die nukleierte Polypropylen-Zusammensetzung (n-PP) die Gleichung 1 erfüllt

$$22\,°C < Tp,m - Tp,c < 33\,°C \qquad (1)$$

wobei

"$T_{p,m}$" die höchste Schmelzspitzentemperatur $T_{p,m}$ [°C], gemessen mit DSC (Abtastrate von 10 °C/min; zweiter Heizschritt) ist und
"$T_{p,c}$" die höchste Kristallisationsspitzentemperatur $T_{p,c}$ [°C], gemessen mit DSC (Abtastrate von 10 °C/min; Abkühlungsschritt) ist.

**3.** Alpha-nukleierte Polypropylen-Zusammensetzung (n-PP) nach Anspruch 1 oder 2, die die Gleichung 2 erfüllt

$$\frac{MFR\ (n-PP)}{(MFR\ (PP1)\ x\ [(PP1)/(n-PP)])} > 2{,}30 \qquad (2)$$

wobei

"MFR (n-PP)" die Schmelzflussrate $MFR_2$ (230 °C; 2,16 kg), gemessen nach ISO 1133, der alpha-nukleierten Polypropylen-Zusammensetzung (n-PP) ist;
"MFR (PP1)" die Schmelzflussrate $MFR_2$ (230 °C; 2,16 kg), gemessen nach ISO 1133, des ersten Polypropylens (PP1) ist;
"[(PP1)/(n-PP)]" die Menge des ersten Polypropylens (PP1) in der alpha-nukleierten Polypropylen-Zusammensetzung (n-PP) geteilt durch die Menge der alpha-nukleierten Polypropylen-Zusammensetzung (n-PP) ist.

**4.** Alpha-nukleierte Polypropylen-Zusammensetzung (n-PP) nach einem der vorhergehenden Ansprüche, die die Gleichung 3 erfüllt

$$MFR\ (n-PP) - MFR\ (PP1) > 35\ g/10min \qquad (3)$$

wobei

"MFR (n-PP)" die Schmelzflussrate $MFR_2$ (230 °C; 2,16 kg), gemessen nach ISO 1133, der alpha-nukleierten Polypropylen-Zusammensetzung (n-PP) ist;
"MFR (PP1)" die Schmelzflussrate $MFR_2$ (230 °C; 2,16 kg), gemessen nach ISO 1133, des ersten Polypropylens (PP1) ist.

**5.** Alpha-nukleierte Polypropylen-Zusammensetzung (n-PP) nach einem der vorhergehenden Ansprüche mit

(a) einer in Xylol kalt löslichen Fraktion (XCS), gemessen bei 25 °C gemäß ISO 16152 im Bereich von 0,1 bis 1,0 Gew.-%, und
(b) optional mit einer Pentaden-Isotaktizität [mmmm] von mindestens 98,0 %.

**6.** Alpha-nukleierte Polypropylen-Zusammensetzung (n-PP) nach einem der vorhergehenden Ansprüche mit einer

Schmelzflussrate $MFR_2$ (230 °C; 2,16 kg), gemessen nach ISO 1133, im Bereich von 45 bis unter 150 g/10min.

**7.** Alpha-nukleierte Polypropylen-Zusammensetzung (n-PP) nach einem der vorhergehenden Ansprüche, wobei die alpha-nukleierte Polypropylen-Zusammensetzung (n-PP) monophasig ist.

**8.** Alpha-nukleierte Polypropylen-Zusammensetzung (n-PP) nach einem der vorhergehenden Ansprüche mit

(a) einem Biegemodul, gemessen nach ISO 178, im Bereich von 1950 bis 2250 MPa, und
(b) optional einer Trübung, gemessen nach ASTM D1003-00, im Bereich von 5,0 bis unter 10,0 %.

**9.** Alpha-nukleierte Polypropylen-Zusammensetzung (n-PP) nach einem der vorhergehenden Ansprüche, wobei

(a) das erste Polypropylen (PP1) und das zweite Polypropylen (PP2) Propylen-Homopolymere sind, oder
(b) das erste Polypropylen (PP1) und das zweite Polypropylen (PP2) Propylen-1-Buten-Copolymere mit einem 1-Buten-Gehalt im Bereich von 0,1 bis 0,6 Mol-% sind.

**10.** Alpha-nukleierte Polypropylen-Zusammensetzung (n-PP) nach einem der vorhergehenden Ansprüche, wobei die alpha-nukleierte Polypropylen-Zusammensetzung (n-PP) ein alpha-nukleiertes Propylen-Homopolymer oder ein alpha-nukleiertes Propylen-1-Buten-Copolymer mit einem 1-Buten-Gehalt im Bereich von 0,1 bis 0,6 Mol-%, vorzugsweise ein alpha-nukleiertes Propylen-Homopolymer, ist.

**11.** Alpha-nukleierte Polypropylen-Zusammensetzung (n-PP) nach einem der vorhergehenden Ansprüche, wobei die Schmelzflussrate $MFR_2$ des zweiten Polypropylens (PP2) im Bereich von 250 bis 2000 g/10min liegt.

**12.** Alpha-nukleierte Polypropylen-Zusammensetzung (n-PP) nach einem der vorhergehenden Ansprüche, wobei die Zusammensetzung außerdem ein oder mehrere Propylen-Homopolymere mit einer Schmelzflussrate $MFR_2$ (230 °C; 2,16 kg), gemessen nach ISO 1133, im Bereich von 1,0 bis 25,0 g/10min und einer höchsten Schmelzspitzentemperatur $T_{p,m}$ , gemessen mittels DSC (Scanrate von 10 °C/min; zweiter Heizschritt) im Bereich von 162 bis 169 °C umfasst, wobei die Gesamtmenge des einen oder der mehreren Propylen-Homopolymere, bezogen auf die Gesamtmenge der alpha-nukleierten Polypropylen-Zusammensetzung (n-PP), im Bereich von 0,5 bis 4,0 Gew.% liegt.

**13.** Alpha-nukleierte Polypropylen-Zusammensetzung (n-PP) nach einem der vorhergehenden Ansprüche, enthaltend mindestens ein alpha-Nukleierungsmittel, ausgewählt aus der Gruppe bestehend aus polymeren Nukleierungsmittel, Nukleierungsmittel auf Sorbitol-Basis, Nukleierungsmittel auf Nonitol-Basis und Nukleierungsmittel auf Benzoltrisamid-Basis, wobei die Gesamtmenge des alpha-Nukleierungsmittels, bezogen auf die Gesamtmenge der alpha-nukleierten Polypropylen-Zusammensetzung (n-PP), im Bereich von 0,001 bis 2,0 Gew.-% liegt.

**14.** Alpha-nukleierte Polypropylen-Zusammensetzung (n-PP) nach einem der vorhergehenden Ansprüche, wobei das/die in der alpha-nukleierten Polypropylen-Zusammensetzung (n-PP) vorhandene(n) alpha-Nukleierungsmittel ausgewählt ist/sind aus der Gruppe bestehend aus Polyvinylcyclohexan (p-VCH), 1,2,3-Trideoxy-4,6,5,7-bis-O-[(4-propylphenyl)methylen]nonitol und Bis-(3,4-dimethylbenzyliden)-sorbitol (DMDBS), wobei außerdem die Gesamtmenge des/der alpha-Nukleierungsmittel, bezogen auf die Gesamtmenge der alpha-nukleierten Polypropylen-Zusammensetzung (n-PP), im Bereich von 0,1 bis 0,8 Gew.-% liegt.

**15.** Dünnwandiger Spritzgussartikel, umfassend, vorzugsweise bestehend aus der alpha-nukleierten Polypropylen-Zusammensetzung (n-PP) nach einem der vorhergehenden Ansprüche, wobei der dünnwandige Spritzgussartikel eine Wandstärke von bis zu 1,0 mm aufweist.

## Revendications

**1.** Composition de polypropylène alpha-nucléé (n-PP) comprenant

(a) un premier polypropylène (PP1) ayant un indice de fluidité à l'état fondu $MFR_2$ (230 °C ; 2,16 kg), mesuré selon ISO 1133, dans la plage de 10 à 100 g/10 min,
(b) un deuxième polypropylène (PP2), et

(c) un agent d'alpha-nucléation,

dans laquelle

- le rapport de poids entre le premier polypropylène (PP1) et le deuxième polypropylène (PP2) [(PP1)/(PP2)] est dans la plage de 75/25 à 55/45, et
- la quantité totale du premier polypropylène (PP1) et du deuxième polypropylène (PP2) ensemble, sur la base de la composition de polypropylène alpha-nucléé (n-PP), est d'au moins 94 % en poids ;

dans laquelle en outre la composition de polypropylène alpha-nucléé (n-PP) a

(i) un indice de fluidité à l'état fondu $MFR_2$ (230 °C ; 2,16 kg), mesuré selon ISO 1133, dans la plage de 40 à 190 g/10 min ;
(ii) une distribution moléculaire massique (MWD) déterminée par chromatographie par perméation de gel (GPC) dans la plage de 3,5 à 6,5 ;
(iii) des 2,1 régio-défauts érythro dans la plage de > 0,35 à 0,85 % en moles mesurés par RMN du carbone 13 ; et
(iv) une teneur en comonomère de pas plus de 0,75 % en moles, dans laquelle le comonomère est sélectionné dans le groupe consistant en éthylène, 1-butène et 1-hexène.

**2.** Composition de polypropylène alpha-nucléé (n-PP) selon la revendication 1 ayant

(a) la température maximale de fusion la plus élevée $T_{p,m}$ mesurée par DSC (vitesse de balayage de 10 °C/min ; deuxième étape de chauffage) dans la plage de 156 à 160 °C, et
(b) la température maximale de cristallisation la plus élevée $T_{p,c}$ mesurée par DSC (vitesse de balayage de 10 °C/min ; étape de refroidissement) dans la plage de 127 à 135 °C,
dans laquelle en outre la composition de polypropylène nucléé (n-PP) est conforme à l'équation 1

$$22\ °C < Tp.m - Tp.c < 33\ °C \quad (1)$$

dans laquelle

« $T_{p,m}$ » est la température maximale de fusion la plus élevée $T_{p,m}$ [°C] mesurée par DSC (vitesse de balayage de 10 °C/min ; deuxième étape de chauffage) et
« $T_{p,c}$ » est la température maximale de cristallisation la plus élevée $T_{p,c}$ [°C] mesurée par DSC (vitesse de balayage de 10 °C/min ; étape de refroidissement).

**3.** Composition de polypropylène alpha-nucléé (n-PP) selon la revendication 1 ou 2 conforme à l'équation 2

$$\frac{MFR\ (n-PP)}{(MFR\ (PP1)\ x\ [(PP1)/(n-PP)])} > 2.30 \quad (2)$$

dans laquelle

« MFR (n-PP) » est l'indice de fluidité à l'état fondu $MFR_2$ (230 °C ; 2,16 kg), mesuré selon ISO 1133, de la composition de polypropylène alpha-nucléé (n-PP) ;
« MFR (PP1) » est l'indice de fluidité à l'état fondu $MFR_2$ (230 °C ; 2,16 kg), mesuré selon ISO 1133, du premier polypropylène (PP1) ;
« [(PP1)/(n-PP)] » est la quantité du premier polypropylène (PP1) dans la composition de polypropylène alpha-nucléé (n-PP) divisée par la quantité de la composition de polypropylène alpha-nucléé (n-PP).

**4.** Composition de polypropylène alpha-nucléé (n-PP) selon l'une des revendications précédentes conforme à l'équation 3

$$MFR\ (n-PP) - MFR\ (PP1) > 35\ g/10min \quad (3)$$

dans laquelle

« MFR (n-PP) » est l'indice de fluidité à l'état fondu $MFR_2$ (230 °C ; 2,16 kg), mesuré selon ISO 1133, de la composition de polypropylène alpha-nucléé (n-PP) ;
« MFR (PP1) » est l'indice de fluidité à l'état fondu $MFR_2$ (230 °C ; 2,16 kg), mesuré selon ISO 1133, du premier polypropylène (PP1).

**5.** Composition de polypropylène alpha-nucléé (n-PP) selon l'une des revendications précédentes ayant

(a) une fraction soluble à froid dans le xylène (XCS) mesurée à 25 °C selon ISO 16152 dans la plage de 0,1 à 1,0 % en poids, et
(b) optionnellement une isotacticité de pentade [mmmm] d'au moins 98,0 %.

**6.** Composition de polypropylène alpha-nucléé (n-PP) selon l'une des revendications précédentes ayant un indice de fluidité à l'état fondu $MFR_2$ (230 °C ; 2,16 kg), mesuré selon ISO 1133, dans la plage de 45 à moins de 150 g/10 min.

**7.** Composition de polypropylène alpha-nucléé (n-PP) selon l'une des revendications précédentes, dans laquelle la composition de polypropylène alpha-nucléé (n-PP) est monophasique.

**8.** Composition de polypropylène alpha-nucléé (n-PP) selon l'une des revendications précédentes ayant

(a) un module d'élasticité en flexion mesuré selon ISO 178 dans la plage de 1950 à 2250 MPa, et
(b) optionnellement un trouble mesuré selon ASTM D1003-00 dans la plage de 5,0 à moins de 10,0 %.

**9.** Composition de polypropylène alpha-nucléé (n-PP) selon l'une des revendications précédentes, dans laquelle

(a) le premier polypropylène (PP1) et le deuxième polypropylène (PP2) sont des homopolymères de propylène, ou
(b) le premier polypropylène (PP1) et le deuxième polypropylène (PP2) sont des copolymères de propylène-1-butène ayant une teneur en 1-butène dans la plage de 0,1 à 0,6 % en moles.

**10.** Composition de polypropylène alpha-nucléé (n-PP) selon l'une des revendications précédentes, dans laquelle la composition de polypropylène alpha-nucléé (n-PP) est un homopolymère de polypropylène alpha-nucléé ou un copolymère de propylène-1-butène alpha-nucléé ayant une teneur en 1-butène dans la plage de 0,1 à 0,6 % en moles, de préférence un homopolymère de polypropylène alpha-nucléé.

**11.** Composition de polypropylène alpha-nucléé (n-PP) selon l'une des revendications précédentes, dans laquelle l'indice de fluidité à l'état fondu $MFR_2$ du deuxième polypropylène (PP2) est dans la plage de 250 à 2000 g/10 min.

**12.** Composition de polypropylène alpha-nucléé (n-PP) selon l'une des revendications précédentes, dans laquelle ladite composition comprend en outre un ou plusieurs homopolymères de propylène ayant un indice de fluidité à l'état fondu $MFR_2$ (230 °C ; 2,16 kg), mesuré selon ISO 1133, dans la plage de 1,0 à 25,0 g/10 min et une température maximale de fusion la plus élevée $T_{p,m}$ mesurée par DSC (vitesse de balayage de 10 °C/min ; deuxième étape de chauffage) dans la plage de 162 à 169 °C, dans laquelle la quantité totale des un ou plusieurs homopolymères de propylène, sur la base de la quantité totale de la composition de polypropylène alpha-nucléé (n-PP), est dans la plage de 0,5 à 4,0 % en poids.

**13.** Composition de polypropylène alpha-nucléé (n-PP) selon l'une des revendications précédentes contenant au moins un agent d'alpha-nucléation sélectionné dans le groupe consistant en un agent de nucléation polymérique, un agent de nucléation à base de sorbitol, un agent de nucléation à base de nonitol et un agent de nucléation à base de benzène-trisamide, dans laquelle la quantité totale d'agent d'alpha-nucléation, sur la base de la quantité totale de la composition de polypropylène alpha-nucléé (n-PP), est dans la plage de 0,001 à 2,0 % en poids.

**14.** Composition de polypropylène alpha-nucléé (n-PP) selon l'une des revendications précédentes, dans laquelle l'agent ou les agents d'alpha-nucléation présents dans la composition de polypropylène alpha-nucléé (n-PP) sont sélectionnés dans le groupe consistant en poly vinylcyclohexane (p-VCH), 1,2,3-trideoxy-4,6 ;5-7-bis-O-[(4-propylphényl)méthylène] nonitol et bis-(3,4-diméthylbenzylidène)-sorbitol (DMDBS), dans laquelle en outre la quantité totale de l'agent ou des agents d'alpha-nucléation, sur la base de la quantité totale de la composition de polypropylène

alpha-nucléé (n-PP), est dans la plage de 0,1 à 0,8 % en poids.

**15.** Article moulé par injection à parois minces comprenant, de préférence consistant en, la composition de polypropylène alpha-nucléé (n-PP) selon l'une des revendications précédentes, dans lequel l'article moulé par injection à parois minces a une épaisseur de paroi de 1,0 mm maximum.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019179959 A
- WO 9414856 A
- WO 9512622 A
- WO 2006097497 A
- WO 03051934 A
- EP 0887379 A
- WO 9212182 A
- WO 2004000899 A
- WO 2004111095 A
- WO 9924478 A
- WO 9924479 A
- WO 0068315 A
- WO 2015082379 A
- WO 2015011134 A
- US 4582816 A
- US 3405109 A
- US 3324093 A
- EP 479186 A
- US 5391654 A
- EP 887379 A
- EP 887380 A
- EP 887381 A
- EP 991684 A
- WO 2020239602 A1


### Non-patent literature cited in the description


- Plastics Additives Handbook. 967-990
- **HANS ZWEIFEL.** Pastics Additives Handbook. 967-990
- **BUSICO, V ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromolecules,* vol. 30 (1997), 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **BUSICO, V. ; CIPULLO, R.** *Prog. Polym. Sci.,* 2001, vol. 26, 443
- **BUSICO, V ; CIPULLO, R. ; MONACO, G. ; VACATELLO, M. ; SEGRE, A.L.** *Macromolecules,* 1997, vol. 30, 6251
- **RESCONI, L. ; CAVALLO, L ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157